# EUROPÄISCHE PATENTANMELDUNG

(11) **EP 4 332 177 A1**
(43) Veröffentlichungstag der Anmeldung: **06.03.2024**
(21) Anmeldenummer: 22193742.8
(22) Anmeldetag: 02.09.2022
(51) Int. Cl.: C09D 5/00

(54) **WÄSSRIGE BESCHICHTUNGSZUSAMMENSETZUNG UND IHRE VERWENDUNG**

(71) Anmelder: EWALD DÖRKEN AG, 58313 Herdecke (DE)
(72) Erfinder: Wark, Reiner, 42103 Wuppertal (DE); Matthée, Nicole, 58313 Herdecke (DE); Kleinkorres, Angela, 58300 Wetter (DE); Smoll, Hanna, 58239 Schwerte (DE); von Rhein, Anastasia, 58769 Nachrodt-Wiblingwerde (DE); Kunka, Martin, 59192 Bergkamen (DE); Roth, Marcel, 40589 Düsseldorf (DE); Reusmann, Gerhard, 45259 Essen (DE)
(74) Vertreter: Von Rohr Patentanwälte Partnerschaft mbB

(57) **Zusammenfassung**

Die Erfindung betrifft eine Beschichtungszusammensetzung zur Herstellung einer Beschichtung mit einstellbarer Reibzahl.

## Beschreibung

Die vorliegende Erfindung betrifft das technische Gebiet der Beschichtungen, insbesondere der Beschichtungen von Massenschüttgut.

Insbesondere betrifft die vorliegende Erfindung eine wässrige Beschichtungszusammensetzung zur Herstellung einer Beschichtung mit einstellbarer Reibzahl. Weiterhin betrifft die vorliegende Erfindung ein Verfahren zur Herstellung einer Beschichtung mit einstellbarer Reibzahl sowie die Verwendung einer wässrigen Beschichtungszusammensetzung zur Herstellung einer Beschichtung mit einstellbarer Reibzahl. Schließlich betrifft die vorliegende Erfindung ein beschichtetes Substrat.

Befestigungselemente, insbesondere Kleinteile wie Bolzen, Muttern und Schrauben, welche zur mechanischen Befestigung von Bauteilen, insbesondere Metallbauteilen verwendet werden, müssen reproduzierbar spezifische Reibzahlen aufweisen, damit sie industriell verarbeitet werden können.

Die Reibzahl µ, auch Reibungskoeffizient genannt, gibt das Verhältnis von Reibungskraft zu Normalkraft an; je höher der Reibungskoeffizient ist, um so höher ist auch die Reibungskraft. Je höher die Reibungskraft ist, um so weniger Energie geht im Verschraubungsprozess in die elastische oder plastische Längung der Schraube ein, mit der Folge einer verringerten sogenannten Vorspannkraft. Die Vorspannkraft ist üblicherweise vorgegeben, um eine sichere Leistung der Verschraubung zu gewährleisten, weshalb sich der Reibungskoeffizient in einen definierten Fenster bewegen muss. Dies ist insbesondere bei Befestigungsmaterialien, wie Bolzen, Schrauben, Muttern oder auch Nieten von besonderer Bedeutung, da diese zur rein mechanischen Befestigung von Bauteilen verwendet werden. Die Reibung muss einerseits ausreichend hoch sein, um ein unbeabsichtigtes Lösen der Verbindung zu verhindern, andererseits jedoch gleichzeitig gering genug, um eine vollständige und stoffschlüssige Verbindung zu ermöglichen.

Darüber hinaus müssen die Reibzahlen möglichst konstant eingestellt sein, damit eine industrielle Verarbeitung, insbesondere mittels Robotern, beispielsweise bei Schrauben mit definiertem Drehmoment oder bei Bolzennieten mit stets gleicher Kraft, möglich ist. Aus diesem Grund werden Befestigungskleinteile in der Praxis oftmals mit speziellen Beschichtungszusammensetzungen in Form von Topcoats beschichtet, welche die Gleit- und Reibeigenschaften der Teile in gewünschter Art und Weise einstellen und beeinflussen sollen.

Die gewünschten Gleit- und Reibeigenschaften von Schrauben oder Bolzen werden üblicherweise gemäß DIN EN ISO 16047:2013-01 bestimmt, wobei speziell für Schrauben vom Verband der Automobilhersteller (VDA) ein Fenster der Reibzahl µ von 0,09 bis 0,16 vorgegeben ist.

Um die gewünschten Reibzahlen einzustellen, enthalten entsprechende Topcoat-Zusammensetzungen in der Regel fluorierte Kunststoffpartikel, insbesondere auf Basis von Polyfluortetraethylen (PTFE) oder Polyvinylidenfluorid (PVDF).

Die Verwendung per- oder teilfluorierter Verbindungen hat jedoch mehrere gravierende Nachteile: So sind zum einen fluorierte Polymere relativ teuer und zum anderen unter Gesichtspunkten des Umweltschutzes besser zu vermeiden. Bei der Herstellung von fluorierten Verbindungen, insbesondere PTFE, fallen üblicherweise nicht unerhebliche Mengen an Perfluoroctansäure (PFOA, perfluoro octanic acid) an bzw. werden zur Herstellung dieser Verbindungen verwendet. Perfluoroctansäure wird in der Natur nahezu nicht abgebaut, in lebenden Organismen akkumuliert und weist insbesondere leberschädigende, reproduktionstoxische und krebserregende Eigenschaften auf. Die Herstellung von Perfluoroctansäure und ihrer Vorläuferverbindungen ist daher, von wenigen Ausnahmen abgesehen, in der Europäischen Union seit dem 4. Juli 2020 verboten. PTFE kann bzgl. PFOA gereinigt werden, so daß PTFE ohne PFOA zum Einsatz kommen kann, doch ist dies energieaufwändig und macht die Gewinnung des Rohstoffes aufwändiger. PTFE selbst ist in wässrigen Medien schwer dispergierbar, ist in der Natur nicht abbaubar - es handelt sich um sogenannte persistente Materialien - und sollte deshalb durch umweltkompatiblere Rohstoffe ersetzt werden.

Darüber hinaus fallen auch bei der Herstellung oder Verwendung von PTFE polyfluorierte Neben- und Abbauprodukte an, welche nach Möglichkeit nicht in die Umwelt gelangen dürfen.

Aus diesem Grund gibt es Bestrebungen, polyfluorierte Kunststoffe nach Möglichkeit durch andere Materialien zu ersetzen. Dieser Austausch ist jedoch oftmals nicht leicht, da poly- oder perfluorierte Kunststoffe besondere und teilweise herausragende Eigenschaften aufweisen, insbesondere im Hinblick auf ihre hydrophoben Benetzungs- bzw. Nichtbenetzungseigenschaften, ihre Beständigkeit gegenüber chemischen und physikalischen Eigenschaften sowie ihre hervorragenden Gleiteigenschaften.

Ein Problem, welches insbesondere bei Verschraubungen auftritt, ist das Warmlöseverhalten, da sich die Gleiteigenschaften von vielen Kunststoffen bei erhöhter Temperatur ändern. Insbesondere verbessern sich die Gleiteigenschaften vieler Kunststoffe bei Erwärmung. Dies ist jedoch bei Verschraubungen unerwünscht, da andernfalls die Gefahr einer unbeabsichtigten Verbindungslösung besteht. Perfluorierte Kunststoffe, insbesondere PTFE und PVDF, zeigen dieses problematische Verhalten nicht bzw. nur in geringem Maße, sodass sie bis heute immer noch das Mittel der Wahl sind, um die Gleit- bzw. Reibeigenschaften von Befestigungsmitteln gezielt einzustellen. PTFE zeichnet sich insbesondere durch seinen hohen Schmelzpunkt aus, wodurch das Reibungsverhalten in höheren Temperaturbereichen optimiert werden kann.

Ein weiteres Problem, welches insbesondere bei Verschraubung mit hohen Drehzahlen auftritt, ist der sogenannte Stick-Slip-Effekt, auch Ruckgleiten genannt. Hierbei wird die Schraube beim Eindrehen nicht mehr gleichmäßig bewegt, sondern geht in ein Haften und Gleiten über. Hierdurch entsteht zum einen eine Drehmomentunsicherheit und zum anderen eine Vorspannkraftunsicherheit, was wiederum zu einer versteckten Versagensgefahr im Betrieb führen kann. Stick-Slip-Effekte sind daher nach Möglichkeit zu vermeiden, weshalb die Gleit- und Hafteigenschaften von Schrauben besonders genau und gleichmäßig einzustellen sind. Stick-Slip-Effekte lassen sich bislang nur durch die Verwendung fluorpolymerhaltiger Topcoats weitgehend verhindern.

Ein Nachteil fluorierter Polymere ist jedoch, dass sie aufgrund ihrer Hydrophobizität vorzugsweise in lösemittelbasierten Systemen eingesetzt werden sollten. Aus Gründen des Umwelt- und Arbeitsschutzes werden allerdings wässrige Systeme zunehmend bevorzugt.

Es fehlt im Stand der Technik bislang an einem wässrigen Beschichtungssystem, welches die gezielte Einstellung der Reibzahlen von insbesondere Befestigungskleinteilen ermöglicht und welches ohne den Einsatz von PTFE auskommt, und vorzugsweise gänzlich ohne den Einsatz fluorierter Polymere, und dies unter Einhaltung der Anforderungen an das eng definierte Reibzahlfenster, das Warmlösen sowie das Stick-Slip Verhalten.

Eine Aufgabe der vorliegenden Erfindung ist somit darin zu sehen, eine Beschichtungszusammensetzung bereitzustellen, welche eine exakte Einstellung der Reibzahlen von Bauteilen, insbesondere Befestigungsteilen, wie insbesondere Schrauben, Muttern, Bolzen oder Nieten, ermöglicht und welches darüber hinaus ohne die Verwendung von PTFE auskommt, und vorzugsweise gänzlich auf fluorierte Polymere verzichtet.

Darüber hinaus ist eine Aufgabe der vorliegenden Erfindung darin zu sehen, ein Beschichtungssystem bereitzustellen, welches zumindest weitgehend ohne organische Lösemittel auskommt und vorzugsweise frei ist von organischen Lösemitteln.

Eine weitere Aufgabe der vorliegenden Erfindung ist darin zu sehen, ein Beschichtungssystem bereitzustellen, welches Stick-Slip-Effekte weitestgehend verhindert.

Gegenstand der vorliegenden Erfindung gemäß einem ersten Erfindungsaspekt ist somit eine wässrige Beschichtungszusammensetzung nach Anspruch 1; weitere vorteilhafte Ausgestaltungen dieses Erfindungsaspekt sind Gegenstand der diesbezüglichen Unteransprüche.

Wiederum weiterer Gegenstand der vorliegenden Erfindung gemäß eine zweiten Aspekt der vorliegenden Erfindung ist die Verwendung einer Beschichtungszusammensetzung nach Anspruch 15.

Wiederum weiterer Gegenstand der vorliegenden Erfindung gemäß einem dritten Aspekt der vorliegenden Erfindung ist ein Verfahren zur Herstellung einer Beschichtung nach Anspruch 16; weitere, vorteilhafte Ausgestaltungen dieses Erfindungsaspektes sind Gegenstand des diesbezüglichen Unteranspruchs.

Schließlich ist weiterer Gegenstand der vorliegenden Erfindung gemäß eine vierten Aspekt der vorliegenden Erfindung ein metallisches Substrat nach Anspruch 18; weitere vorteilhafte Ausgestaltungen dieses Erfindungsaspekt sind Gegenstand der diesbezüglichen Unteransprüche.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit eine wässrige Beschichtungszusammensetzung zur Herstellung einer Beschichtung, insbesondere eines Topcoats mit einstellbarer Reibzahl, wobei die Zusammensetzung
(a) ein organisches Bindemittel, wobei das Bindemittel ein Copolymer aus mindestens einem ungesättigten Kohlenwasserstoff und mindestens einer ungesättigten Carbonsäure aufweist, und
(b) ein Schmiermittel
enthält.

Denn, wie die Anmelderin überraschenderweise herausgefunden hat, lassen sich Topcoats mit hervorragenden Gleit- und Reibeigenschaften erhalten, wenn eine Beschichtungszusammensetzung verwendet wird, welche ein organisches Bindemittel, das ein Copolymer aus mindestens einem ungesättigten Kohlenwasserstoff, insbesondere einem Olefin, und mindestens einer ungesättigten Carbonsäure aufweist, und ein Schmiermittel enthält. Derartige Beschichtungszusammensetzungen lassen sich problemlos in wässrigem Medium formulieren und können darüber hinaus frei von PTFE sein. Vorzugsweise sind sie sogar gänzlich frei von fluorierten Polymeren.

Die vorliegende Erfindung ermöglicht somit einen einfachen Zugang zu Topcoats, deren Reibzahlen auf für die industrielle Fertigung benötigte Werte eingestellt werden können, und dies in Systemen, welche sowohl lösemittelfrei als auch frei von fluorierten Polymeren, insbesondere frei von PTFE, sind. Die erfindungsgemäße Beschichtungszusammensetzung ist somit sowohl unter Umweltgesichtspunkten als auch unter Aspekten des Arbeitsschutzes den bislang bekannten üblicherweise fluorpolymerhaltigen und lösemittelbasierten Systemen überlegen.

Vorzugsweise weist dabei das organische Bindemittel bereits gewisse Gleiteigenschaften auf. Diese Gleiteigenschaften des Bindemittels werden insbesondere durch Segmente des Copolymers erzielt, welche aus den polymerisierten ungesättigten Kohlenwasserstoffen, insbesondere polymerisierten Olefinen, aufgebaut sind. Die polaren Gruppen der Carbonsäuren führen dazu, dass das Polymer trotz hydrophober Bereiche, wasserlöslich oder zumindest wasserdispergierbar bleibt.

Es hat sich dabei gezeigt, dass die Gleiteigenschaften nochmals deutlich verbessert werden und die Reibzahl, insbesondere auch bei erhöhten Temperaturen stabil eingestellt werden kann, wenn dem organischen Bindemittel ein Schmiermittel zugesetzt ist.

Unter einem Schmiermittel ist im Rahmen der vorliegenden Erfindung ein chemischer Stoff oder ein Stoffgemisch zu verstehen, welches die tribologischen Eigenschaften einer Beschichtung ändert, insbesondere die Reibung mindert. Schmiermittel können im Rahmen der vorliegenden Erfindung sowohl flüssig als auch als Feststoff vorliegen, wobei die Verwendung fester Schmiermittel bevorzugt ist.

Wie zuvor bereits ausgeführt, ist es im Rahmen der industriellen Produktion, insbesondere der Verschraubung durch Roboter, unerlässlich, dass die Gleiteigenschaften bzw. die Reibzahlen von beschichteten Befestigungsmitteln, insbesondere Schrauben, reproduzierbar stets vergleichbare Werte annehmen. Aus diesem Grund definiert die VDA Richtlinie 235-101 ein sogenanntes Reibzahlfenster, in welchem die Reibzahl µ für Befestigungsmittel, insbesondere Bolzen, Muttern und Schrauben liegen darf. Dieses Reibzahlfenster umfasst ein Intervall der Reibzahl µ von 0,09 bis 0,16. Die Reibzahl wird dabei gemäß DIN EN ISO 16047:2013-01 bestimmt. Sofern andere Reibzahlfenster definiert und gewünscht werden, lassen sich diese durch die beschriebenen erfinderischen Ansätze ebenfalls erfüllen.

Im Rahmen der vorliegenden Erfindung wird es bevorzugt, wenn die mit der erfindungsgemäßen Beschichtungszusammensetzung beschichtete Oberfläche bzw. das beschichtete Substrat eine Reibzahl µ bestimmt nach DIN EN ISO 16047:2013-01 im Bereich von 0,09 bis 0,16 aufweist.

Im Fall von Schrauben wird die Reibzahl dabei sowohl am Gewinde, als auch an einer ebenen Fläche, insbesondere dem Kopf der Schraube, bestimmt. Diese zweifache Bestimmung ist notwendig, da Werkstücke, insbesondere Gewindeteile, am Gewinde eine andere Reibzahl aufweisen als an ebenen beschichteten Flächen, wie zum Beispiel dem Kopf einer Schraube. So weisen Schrauben, die als Innenträger ausgestaltet sind, am Gewinde eine höhere Reibzahl und damit schlechtere Gleiteigenschaften auf als am Kopf der Schraube, der auf einer Mutter oder Gewindescheibe aufliegt. Liegt die Schraube als Außenträger vor, so ist die Reibzahl am Kopf höher als am Gewinde.

Da die Reibzahlmessung für beide Bereiche (Gewinde und ebene Fläche) in die Reibzahlbestimmung für das gesamt Werkstück eingehen, weisen Werkstücke, die mit einer Beschichtung ohne Schmiermittel beschichtet sind, oftmals eine unerwünscht hohe Reibzahl auf. Erfindungsgemäß kann hingegen auf die Verwendung von Gleitmitteln verzichtet werden.

Im Rahmen der vorliegenden Erfindung ist es vorzugsweise vorgesehen, dass für Gewindeteile, wie beispielsweise Schrauben, die Reibzahl sowohl für das Gewinde als auch die ebene Fläche jeweils im vorgenannten Reibzahlfenster von der Reibzahl µ von 0,09 bis 0,16 liegen.

Da die in der DIN EN ISO 16047:2013-01 genannte Prüfverordnung für einen einmaligen Anzug gilt, wird ergänzend im Prüfblatt gemäß VDA 235-203 eine Prüfanordnung für einen Mehrfachanzug festgelegt.

Im Rahmen der vorliegenden Erfindung ist es vorzugsweise weiterhin vorgesehen, dass auch bei einem Mehrfachanzug das oben genannte Reibzahlfenster für die Reibzahl µ von 0,09 bis 0,16 erfüllt ist, und zwar sowohl am Gewinde als auch an ebenen Flächen.

Darüber hinaus ist auch das Warmlöseverhalten von Werkstücken, insbesondere von Befestigungsmitteln, wie Schrauben oder Bolzen, kritisch, insbesondere wenn diese im Bereich von Aggregaten, wie beispielsweise Motoren, verbaut sind. Aus diesem Grund definiert das VDA-Prüfblatt 235-203 eine Prüfanordnung bei Temperaturbelastung bei 150 °C, wobei ein Reibzahlfenster µ von 0,06 nicht unterschritten werden darf.

Im Rahmen der vorliegenden Erfindung wird es daher bevorzugt, wenn die mit der erfindungsgemäßen Beschichtungszusammensetzung beschichteten Werkstücke bei 150 °C gemäß VDA-Prüfblatt 235-203 eine Reibzahl µ im Bereich von 0,09 bis 0,16 aufweisen. Dieses Reibzahlfenster ist vorzugsweise sowohl für die Gesamtreibzahl als auch, bei Werkstücken mit Gewinde, am Gewinde und an der ebenen Fläche erfüllt.

Unter einem ungesättigten Kohlenwasserstoff ist im Rahmen der vorliegenden Erfindung eine vorzugsweise unpolare organische Verbindung zu verstehen, welche über mindestens eine ungesättigte Bindung, insbesondere mindestens eine Kohlenstoff-Kohlenstoffdoppelbindung oder eine Kohlenstoff-Kohlenstoff-Dreifachbindung verfügt. Bei den ungesättigten Kohlenwasserstoffen handelt es sich in erster Linie um Alkene und Alkine, insbesondere um Verbindungen mit Vinyl- und/oder Alkenylgruppen, wobei jedoch auch Aromaten und Heteroaromaten mit Alken- oder Alkinseitenketten, insbesondere mit Vinyl- und/oder Alkenylgruppen, umfasst sind. Die Kohlenwasserstoffe können darüber hinaus auch substituiert sein, beispielsweise mit Halogeniden, sowie Alkohol-, Amin- oder Thiolfunktionen. Vorzugsweise handelt es sich jedoch um unsubstituierte Kohlenwasserstoffe, d.h. Alkene und Alkine bzw. deren Mischungen.

Unter einer ungesättigten Carbonsäure ist im Rahmen der vorliegenden Erfindung eine Carbonsäure zu verstehen, die eine Kohlenstoff-Zweifachbindung oder eine Kohlenstoff-Dreifachbindung aufweist. Die Carbonsäuren können neben der Säuregruppe gegebenenfalls noch mit weiteren funktionalen Gruppen, insbesondere Alkohol-, Thiol-, Amin- und Etherfunktionen oder dergleichen versehen sein. Unter die Carbonsäuren fallen insbesondere auch Derivate der Carbonsäuren, insbesondere deren Ester und Amide.

Im Rahmen der vorliegenden Erfindung ist es weiterhin bevorzugt, wenn das Copolymer aus mindestens einem ungesättigten Kohlenwasserstoff und mindestens einer ungesättigten Carbonsäure ein Blockcopolmyer ist. Besonders bevorzugt ist es in diesem Zusammenhang, wenn das Blockcopolymer Blöcke aus Segmenten des ungesättigten Kohlenwasserstoffs aufweist. Gerade die ungesättigten Kohlenwasserstoffe tragen dazu bei, dass das Bindemittel der Beschichtungszusammensetzung, insbesondere der Topcoat-Zusammensetzung, bereits hervorragende Gleiteigenschaften aufweist und eine gezielte Einstellung der Reibzahl erlaubt.

Üblicherweise ist es im Rahmen der vorliegenden Erfindung vorgesehen, dass der ungesättigte Kohlenwasserstoff ausgewählt ist aus der Gruppe von aliphatischen Kohlenwasserstoffen mit Vinylgruppen, aromatischen Kohlenwasserstoffen mit Vinylgruppen, aliphatischen Kohlenwasserstoffen mit Alkinylgruppen, aromatischen Kohlenwasserstoffen mit Alkinylgruppen und deren Mischungen. Besonders gute Ergebnisse werden erhalten, wenn der ungesättigte Kohlenwasserstoff ausgewählt ist aus der Gruppe von aliphatischen Kohlenwasserstoffen mit Vinylgruppen, aromatischen Kohlenwasserstoffen mit Vinylgruppen und deren Mischungen. Besonders bevorzugt wird es dabei, wenn der ungesättigte Kohlenwasserstoff ein aliphatischer Kohlenwasserstoffe mit Vinylgruppen ist. Bei den ungesättigten Kohlenwasserstoffen handelt es sich, wie oben ausgeführt, vorzugsweise um Alkene und/oder Alkine, vorzugsweise um Alkene.

Speziell durch die Verwendung von Kohlenwasserstoffen mit Vinylgruppen bzw. Alkenen lassen sich unpolare Segmente in den Copolymeren erzeugen, welche dem Bindemittel bzw. der Beschichtung Gleiteigenschaften verleihen können und so eine gezielte Reibzahleinstellung begünstigen.

Besonders gute Ergebnisse werden im Rahmen der vorliegenden Erfindung erhalten, wenn der ungesättigte Kohlenwasserstoff ausgewählt ist aus der Gruppe von aliphatischen und/oder aromatischen C₂- bis C₂₀-Verbindungen mit Alkinylgruppen, aliphatischen und/oder aromatischen C₂- bis C₂₀-Verbindungen mit Vinylgruppen und deren Mischungen, insbesondere aliphatischen und/oder aromatischen C₂- bis C₁₂- Verbindungen mit Alkinylgruppen, aliphatischen und/oder aromatischen C₂- bis C₁₂-Verbindungen mit Vinylgruppen und deren Mischungen, vorzugsweise aliphatischen und/oder aromatischen C₂- bis C₁₀-Verbindungen mit Alkinylgruppen, aliphatischen und/oder aromatischen C₂- bis C₁₀-Verbindungen mit Vinylgruppen und deren Mischungen, bevorzugt aliphatischen und/oder aromatischen C₂- bis C₈- Verbindungen mit Alkinylgruppen, aliphatischen und/oder aromatischen C₂- bis C₈- Verbindungen mit Vinylgruppen und deren Mischungen, besonders bevorzugt aliphatischen C₂- bis C₆-Verbindungen mit Vinylgruppen. Es hat sich dabei bewährt, wenn der ungesättigte Kohlenwasserstoff ausgewählt ist aus der Gruppe von aliphatischen C₂- bis C₄-Alkenen mit Vinylgruppen. In diesem Zusammenhang ist es nochmals bevorzugt, wenn der ungesättigte Kohlenwasserstoff ausgewählt ist aus C₂- und C₃-Alkenen sowie deren Mischungen. Ganz besonders bevorzugt wird es im Rahmen der vorliegenden Erfindung, wenn ein C₂-Alken, d.h. Ethen verwendet wird.

Im Rahmen der vorliegenden Erfindung ist es gleichermaßen bevorzugt, wenn der ungesättigte Kohlenwasserstoff ausgewählt ist aus der Gruppe von Styrol, 1-Hexin, 1-Pentin, 1-Butin, 2-Butin, Propin, Ethin, 1-Hexen, 1-Penten, 1-Buten, 2-Buten, Propen, Ethen und deren Mischungen. Vorzugsweise ist der ungesättigte Kohlenwasserstoff dabei ausgewählt ist aus der Gruppe von 1-Hexin, 1-Pentin, 1-Butin, 2-Butin, Propin, Ethin, 1-Hexen, 1-Penten, 1-Buten, 2-Buten, Propen, Ethen und deren Mischungen. Besonders gute Ergebnisse werden erhalten, wenn der ungesättigte Kohlenwasserstoff ausgewählt ist aus Styrol, 1-Buten, 1-Propen, Ethen und deren Mischungen, insbesondere 1-Buten, 1-Propen, Ethen und deren Mischungen, vorzugsweise Propen, Ethen und deren Mischungen. Ganz besonders bevorzugt wird es im Rahmen der vorliegenden Erfindung, wenn der ungesättigte Kohlenwasserstoff Ethen ist.

Was nun die ungesättigte Carbonsäure anbelangt, so kann diese aus einer Vielzahl von Verbindungen ausgewählt sein. Es hat sich jedoch als vorteilhaft erwiesen, wenn die ungesättigte Carbonsäure aus Alkensäuren ausgewählt ist. Besonders gute Ergebnisse werden hierbei erhalten, wenn die ungesättigte Carbonsäure ausgewählt ist aus C₂- bis C₂₀-Alkensäuren, insbesondere C₂- bis C₁₂-Alkensäuren, vorzugsweise C₂- bis C₁₀-Alkensäuren, bevorzugt C₂- bis C₄-Alkensäuren, besonders bevorzugt C₂- und C₃-Alkensäuren, und deren Estern und Amiden.

Vorzugsweise ist es jedoch vorgesehen, dass die ungesättigten Carbonsäuren als freie Säuren eingesetzt werden.

Im Rahmen der vorliegenden Erfindung hat es sich bewährt, wenn die ungesättigte Carbonsäure ausgewählt ist aus der Gruppe von Acrylsäure, Estern der Acrylsäure mit C₁- bis C₁₀-Alkoholen, Methacrylsäure, Estern der Methacrylsäure mit C₁- bis C₁₀-Alkoholen, Fumarsäure, Maleinsäure und deren Mischungen. Besonders gute Ergebnisse werden in diesem Zusammenhang erhalten, wenn die ungesättigte Carbonsäure ausgewählt ist aus der Gruppe von Acrylsäure, Ethern der Acrylsäure mit C₁- bis C₁₀-Alkoholen, Methacrylsäure und Estern der Methacrylsäure mit C₁-bis C₁₀-Alkoholen und deren Mischungen.

Noch weiter bevorzugt wird es im Rahmen der vorliegenden Erfindung, wenn die ungesättigte Carbonsäure ausgewählt ist aus der Gruppe von Acrylsäure, Acrylsäuremethylester, Acrylsäureethylester, Acrylsäurebutylester, Acrylsäureisobutylester, Acrylsäure-2-ethylhexylester, Methacrylsäure, Methacrylsäuremethylester, Methacrylsäureethylester, Methacrylsäurebutylester, Methacrylsäureisobutylester und Methacrylsäurehexylester. In diesem Zusammenhang hat es sich besonders bewährt, wenn die ungesättigte Carbonsäure ausgewählt ist aus der Gruppe von Acrylsäure, Acrylsäuremethylester, Acrylsäureethylester, Methacrylsäure, Methacrylsäuremethylester und Methacrylsäureethylester, vorzugsweise Acrylsäure und Methacrylsäure.

Was nun das Molekulargewicht des Copolymers anbelangt, so kann dieses naturgemäß gleichermaßen in weiten Bereichen variieren. Es hat sich jedoch bewährt, wenn das Copolymer ein gewichtsmittleres Molekulargewicht M_{w} im Bereich von 2.000 bis 250.000 g/mol, insbesondere 5.000 bis 200.000 g/mol, vorzugsweise 10.000 bis 150.000 g/mol, bevorzugt 15.000 bis 100.000 g/mol, aufweist

Die im Rahmen dieser Erfindung angegebenen Molekulargewichte für polymere Verbindungen beziehen sich auf das gewichtsmittlere Molekulargewicht M_{w}, bei welchem die Masse der einzelnen polymeren Verbindungen mit ihrem Gewichtsanteil gewichtet wird. Die Molekulargewichte bzw. die Molekulargewichtsverteilung kann durch verschiedene, standardisierte Verfahren und Methoden bestimmt werden, wie beispielsweise durch Lichtstreuung, Rheologie, Massenspektrometrie, Permeations-Chromatographie etc. Die zur Bestimmung der Molekulargewichtsverteilung verwendeten Verfahren sind dem Fachmann jedoch geläufig und bedürfen keiner näheren Erläuterung. So können die Molekulargewichte der eingesetzten Polymere insbesondere anhand einer GPC-Methode bestimmt werden, insbesondere auf Basis der DIN 55672 mit Polymethylmethacrylat bzw. Polystyrol als Standard.

Die Beschichtungszusammensetzung kann das organische Bindemittel in nahezu beliebigen Mengen enthalten. Es hat sich jedoch bewährt, wenn die Beschichtungszusammensetzung das organische Bindemittel in Mengen von 2 bis 70 Gew.-%, insbesondere 5 bis 60 Gew.-%, vorzugsweise 10 bis 50 Gew.-%, bevorzugt 10 bis 40 Gew.-%, bezogen auf die Beschichtungszusammensetzung, enthält

Wie zuvor ausgeführt, enthält die Beschichtungszusammensetzung ein Schmiermittel. Das Schmiermittel ist dabei vorzugsweise ausgewählt aus der Gruppe von organischen Schmiermitteln, anorganischen Schmiermitteln und deren Mischungen. Besonders gute Ergebnisse werden im Rahmen der vorliegenden Erfindung jedoch erhalten, wenn das Schmiermittel ein organisches oder Schmiermittel ist.

Die im Rahmen der vorliegenden Erfindung verwendeten Schmiermittel liegen üblicherweise in partikulärer Form vor. Die Schmiermittel weisen dabei üblicherweise absolute Partikelgrößen im Mikrometerbereich auf.

Im Rahmen der vorliegenden Erfindung werden besonders gute Ergebnisse erhalten, wenn das Schmiermittel ausgewählt ist aus der Gruppe von Wachsen, Graphen, Graphit, Bornitrid, Molybdändisulfid, Kunststoffpartikeln, insbesondere aus Polyetherketon (PEK), Polyetheretherketon (PEEK), Polyphenylensulfid (PPS), Polyethersulfon (PES), Polyetherimid (PEI), Polyamidimid (PAI) und deren Mischungen, mikronisiertem Schwefel und deren Mischungen. Vorzugsweise ist das Schmiermittel ausgewählt ist aus der Gruppe von Wachsen, Graphen, Graphit, Bornitrid, Molybdändisulfid und deren Mischungen. Besonders gute Ergebnisse werden im Rahmen der vorliegenden Erfindung erhalten, wenn das Schmiermittel ein Wachs ist.

Unter einem Wachs ist im Rahmen der vorliegenden Erfindung insbesondere ein natürlicher oder künstlich gewonnener Stoff zu verstehen, der üblicherweise bei 20 °C knetbar, fest bis brüchig hart, grob bis feinkristallin, durchscheinend bis opak, jedoch nicht glasartig ist und bei über 40 °C ohne Zersetzung schmilzt. Schon wenig oberhalb des Schmelzpunktes ist ein Wachs üblicherweise verhältnismäßig niedrig viskos und nicht fadenziehend. Wachse unterscheiden sich von ähnlichen synthetischen oder natürlichen Produkten hauptsächlich darin, dass sie in der Regel etwa zwischen 50 und 90 °C, in Ausnahmen auch bis zu etwa 200 °C, in den schmelzflüssigen, niedrig viskosen Zustand übergehen und praktisch frei von aschebildenden Verbindungen sind. Wachse bilden Pasten oder Gele und brennen in der Regel mit rußender Flamme. Nach Ihrer Herkunft teilt man Wachsen in drei Gruppen, nämlich natürliche Wachse, teilsynthetische Wachse und synthetische Wachse ein. Natürliche Wachse bestehen insbesondere aus pflanzlichen Wachsen, wie beispielsweise Candelillawachs, Carnaubawachs oder Montanwachs, tierischen Wachsen, wie beispielsweise Bienenwachs, Wollwachs und Bürzelfett, Mineralwachsen, wie Ceresin und Ozokerit, sowie petrochemischen Wachsen, insbesondere Petrolatum, Paraffinwachse und Mikrowachse. Teilsynthetische Wachse sind insbesondere Hartwachse, wie beispielsweise Montanesterwachse und hydrierte Jojobawachse. Synthetische Wachse sind beispielsweise Polyalkylenwachse oder Polyethylenglycolwachse.

Wenn es sich bei dem Schmiermittel um ein Wachs handelt, so hat es sich bewährt, wenn das Wachs ausgewählt ist aus der Gruppe von natürlichen Wachsen, teilsynthetischen Wachsen, synthetischen Wachsen und deren Mischungen. Vorzugsweise handelt es sich bei dem Wachs um ein synthetisches Wachs.

Gleichermaßen wird es im Rahmen der vorliegenden Erfindung bevorzugt, wenn das Wachs ausgewählt ist aus der Gruppe von Bienenwachs, Carnaubawachs, Montanwachs, modifiziertem Montanwachs, Amidwachs, Polypropylenwachs, Polyethylenwachs, HDPE-Wachs (High-Density-Polyethylene-Wachs), oxidiertem HDPE-Wachs, Ethylen-Vinylacetatwachs, Polyethylenglycolwachs, Polyesterwachs, Fischer-Tropsch-Wachs und deren Mischungen, vorzugsweise Polypropylenwachs, Polyethylenwachs, HDPE-Wachs, oxidiertem HDPE-Wachs, Ethylen-Vinylacetatwachs, Polyethylenglycolwachs, Polyesterwachs, Fischer-Tropsch-Wachs und deren Mischungen.

Besonders gute Ergebnisse werden in diesem Zusammenhang erhalten, wenn das Wachs ausgewählt ist aus der Gruppe von Polypropylenwachs, Polyethylenwachs, HDPE-Wachs, oxidiertem HDPE-Wachs, Fischer-Tropsch-Wachs und deren Mischungen.

Ganz besonders bevorzugt ist im Rahmen der vorliegenden Erfindung, wenn das Wachs ein Polyethylenwachs (PE-Wachs) ist.

Mit Wachsen, insbesondere synthetischen Wachsen, vorzugsweise PolyethylenWachs, als Schmiermittel, lassen sich speziell die Gleit- und Reibungseigenschaften der Beschichtungszusammensetzung hervorragend einstellen. Insbesondere zeigen gerade Kombinationen von organischem Bindemittel und einem Schmiermittel auf Wachsbasis hervorragende und beständige Reibzahlen, insbesondere auch bei Mehrfachanzug und auch unter Wärmebelastung.

Was nun die Menge anbelangt, in welcher die Beschichtungszusammensetzung das Schmiermittel enthält, so kann diese in weiten Bereichen variieren. Es hat sich allerdings als vorteilhaft erwiesen, wenn die Beschichtungszusammensetzung das Schmiermittel in Mengen von 0,1 bis 10 Gew.-%, insbesondere 0,3 bis 8 Gew.-%, vorzugsweise 0,5 bis 5 Gew.-%, bevorzugt 0,8 bis 4 Gew.-%, bezogen auf die Beschichtungszusammensetzung, enthält.

Im Rahmen der vorliegenden Erfindung ist es vorteilhafter Weise vorgesehen, dass die Beschichtungszusammensetzung frei ist von fluorhaltigen Verbindungen, insbesondere frei ist von organischen fluorhaltigen Verbindungen. Ganz besonders bevorzugt ist es im Rahmen der vorliegenden Erfindung vorgesehen, dass die Beschichtungszusammensetzung frei ist von fluorierten Polymerpartikeln, insbesondere frei ist von PTFE und PVDF.

Es ist ein großer Vorteil der vorliegenden Erfindung, dass Beschichtungszusammensetzungen mit gezielt einstellbarer Reibzahl bereitgestellt werden können, welche ohne den Einsatz bedenklicher fluorierter Polymerpartikel auskommen. Insbesondere ist es im Rahmen der vorliegenden Erfindung möglich, Beschichtungszusammensetzungen mit hervorragenden Gleit- und Reibeigenschaften bereitzustellen, welche vollkommen ohne den Einsatz von fluorierten organischen Verbindungen auskommt.

Im Rahmen der vorliegenden Erfindung kann es weiterhin vorgesehen sein, dass die Beschichtungszusammensetzung mindestens einen Verdicker und/oder ein Rheologieadditiv aufweist.

Verdicker bzw. Rheologieadditive dienen insbesondere der Einstellung der Viskosität sowie des Verlaufs oder auch der Schichtdicke, mit welcher die erfindungsgemäße Zusammensetzung auf ein Substrat aufgebracht werden kann.

Wenn die Beschichtungszusammensetzung einen Verdicker und/oder ein Rheologieadditiv enthält, so enthält die Beschichtungszusammensetzung den Verdicker und/oder das Rheologieadditiv üblicherweise in Mengen von 0,01 bis 5 Gew.-%, insbesondere 0,05 bis 3 Gew.-%, vorzugsweise 0,1 bis 2 Gew.-%, bezogen auf die Beschichtungszusammensetzung.

Der Verdicker und/oder das Rheologieadditiv kann dabei aus einer Vielzahl geeigneter Verbindungen und Verbindungsklassen ausgewählt werden. Es hat sich jedoch bewährt, wenn der Verdicker und/oder das Rheologieadditiv ausgewählt ist aus der Gruppe von Ethylcellulose, Kieselsäure und deren Mischungen. Besonders bevorzugt ist der Verdicker und/oder das Rheologieadditiv Kieselsäure, insbesondere pyrogene Kieselsäure.

Gemäß einer weiteren bevorzugten Ausführungsform der vorliegenden Erfindung enthält die Beschichtungszusammensetzung
(a) ein organisches Bindemittel, wobei das Bindemittel ein Copolymer aus mindestens einem ungesättigten Kohlenwasserstoff und mindestens einer ungesättigten Carbonsäure aufweist,
(b) ein Schmiermittel und
(c) einen Verdicker und/oder ein Rheologieadditiv.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Weiterhin kann es im Rahmen der vorliegenden Erfindung vorgesehen sein, dass die Beschichtungszusammensetzung plättchenförmige Partikel enthält.

Unter plättchenförmigen Partikeln, welche auch oftmals als schuppenförmige Partikel bezeichnet werden, sind im Rahmen der vorliegenden Erfindung Partikel zu verstehen, deren Dicke deutlich geringer ist als die Länge und Breite, d.h. deren Ausdehnung in eine Raumrichtung deutlich geringer ist als in die beiden anderen Raumrichtungen. Üblicherweise liegt das Aspektenverhältnis, d.h. das Verhältnis von Länge bzw. Breite der Partikel zur Dicke der Partikel im Bereich von 2 : 1 bis 100 : 1, insbesondere 4 : 1 bis 50 : 1, vorzugsweise 5 : 1 bis 20 : 1, bevorzugt 8 : 1 bis 15 : 1.

Die plättchenförmigen Partikel sind vorzugsweise ausgewählt aus der Gruppe von Metallflakes, Glasflakes, Schichtsilikaten und deren Mischungen. Die Schichtsilikate sind dabei vorzugsweise ausgewählt aus der Gruppe von Glimmer, Talkum, Bentonit, Kaolin und deren Mischungen. Die Metallflakes sind in diesem Zusammenhang vorzugsweise ausgewählt aus der Gruppe von Aluminiumflakes, Zinkflakes, Kuperflakes und deren Mischungen.

Bevorzugt sind die plättchenförmigen Partikel Metallflakes, insbesondere ausgewählt aus der Gruppe von Aluminiumflakes, Zinkflakes, Kuperflakes und deren Mischungen. Besonders bevorzugt ist es, wenn die plättchenförmigen Partikel Aluminiumflakes sind.

Wenn die Beschichtungszusammensetzung plättchenförmige Partikel enthält, so weist die Beschichtungszusammensetzung plättchenförmige Partikel üblicherweise in Mengen von 0,3 bis 8 Gew.-%, vorzugsweise 0,5 bis 5 Gew.-%, bevorzugt 0,8 bis 4 Gew.-%, bezogen auf die Beschichtungszusammensetzung, auf.

Besonders gute Ergebnisse werden in diesem Zusammenhang erhalten wenn die Beschichtungszusammensetzung eine Gesamtmenge an Schmiermittel und plättchenförmigen Partikeln im Bereich von von 0,5 bis 20 Gew.-%, insbesondere 1 bis 18 Gew.-%, vorzugsweise 1,5 bis 15 Gew.-%, bevorzugt 2 bis 12 Gew.-%, bezogen auf die Beschichtungszusammensetzung, enthält.

Durch den zusätzlichen Einsatz von plättchenförmigen Partikeln in der Beschichtungszusammensetzung können die Reibzahlen und die Gleiteigenschaften der beschichteten Substrate genau eingestellt werden und insbesondere der Stick-Slip-Effekt noch besser vermieden werden. Darüber hinaus ermöglicht die Verwendung plättchenförmiger Partikel auch die Trocknung bzw. Härtung der Beschichtungszusammensetzung bei hohen Temperaturen, ohne dass ein Anstieg der Reibzahl beobachtet wird. Dies ist überraschend, da schmiermittelhaltige Topcoats, insbesondere für den Fall, dass sie Wachse enthalten, nach Temperaturbelastung, insbesondere nach Trocknung bei hohen Temperaturen, eine höhere Reibzahl aufweisen. Dies ist insbesondere darauf zurückzuführen, dass die Schmiermittel, insbesondere Wachse, während des Trocknungsprozesses in die Gasphase übergehen oder thermisch zersetzt werden. Erstaunlicherweise zeigen Topcoats, die neben einem Schmiermittel plättchenförmige Partikel enthalten, diesen Anstieg der Reibzahl nicht. Dies ist - ohne sich auf eine Theorie festlegen zu wollen - wahrscheinlich darauf zurückzuführen, dass die plättchenförmigen Partikel als Diffusionsbarriere wirken und einerseits das Eindringen von Sauerstoff in die Beschichtung verzögern und so eine Zersetzung des Schmierstoffs verlangsamen und andererseits, bei Verwendung verdampfbarer bzw. sublimierter Schmierstoffe, den Schmierstoff daran hindern in die Gasphase überzugehen.

Besonders gute Ergebnisse werden erhalten, wenn das gewichtsbezogene Verhältnis von plättchenförmigen Partikeln zu Schmiermittel im Verhältnis von 1 : 0,8 bis 1 : 1,8 insbesondere 1 : 1 bis 1 : 1,6 vorzugweise 1, : 1,1 bis 1 : 1,4, bezogen auf das Gewicht an plättchenförmigen Partikeln und das Gewicht an Schmiermittel in der Beschichtungszusammensetzung, liegt.

Gemäß einer bevorzugten Ausführungsform der vorliegenden Erfindung enthält die Beschichtungszusammensetzung
(a) ein organisches Bindemittel, wobei das Bindemittel ein Copolymer aus mindestens einem ungesättigten Kohlenwasserstoff und mindestens einer ungesättigten Carbonsäure aufweist,
(b) ein Schmiermittel,
(c) einen Verdicker und/oder ein Rheologieadditiv und
(d) plättchenförmige Partikel.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Darüber hinaus kann es vorgesehen sein, dass die Beschichtungszusammensetzung mindestens ein weiteres Additiv aufweist.

Falls die Beschichtungszusammensetzung ein weiteres Additiv aufweist, so enthält die Beschichtungszusammensetzung das weitere Additiv in Mengen von 0,01 bis 5 Gew.-%, insbesondere 0,05 bis 3 Gew.-%, vorzugsweise 0,1 bis 2 Gew.-%, bezogen auf die Beschichtungszusammensetzung.

Besonders gute Ergebnisse werden in diesem Zusammenhang erhalten, wenn das weitere Additiv ausgewählt ist aus der Gruppe von Netzmitteln, Konservierungsmitteln, Stabilisatoren, Säuren und/oder Basen, entschäumenden Komponenten, Filmbildnern, Verlaufsmitteln, UV-Absorbern, Füllstoffen, pH-Stabilisatoren und pH-Einstellmitteln.

Gemäß einer bevorzugten Ausführungsform der vorliegenden Erfindung ist es somit vorgesehen, dass die Beschichtungszusammensetzung
(a) ein organisches Bindemittel, wobei das Bindemittel ein Copolymer aus mindestens einem ungesättigten Kohlenwasserstoff und mindestens einer ungesättigten Carbonsäure aufweist,
(b) ein Schmiermittel
(c) einen Verdicker und/oder ein Rheologieadditiv,
(d) plättchenförmige Partikel und
(e) ein weiteres Additiv
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Gemäß einer bevorzugten Ausführungsform der vorliegenden Erfindung ist es vorgesehen, dass die Beschichtungszusammensetzung weiterhin ein anorganisches Bindemittel enthält. Durch den Zusatz eines anorganischen Bindemittels wird insbesondere die Verschleißbeständigkeit und mechanische Widerstandsfähigkeit der Beschichtung. Darüber hinaus ist der Einsatz anorganischer Beschichtungen auch kommerziell wünschenswert, da diese oftmals kostengünstig in großindustriellem Maßstab herzustellen bzw. zu beziehen sind. Wenn die Beschichtungszusammensetzung ein anorganisches Bindemittel enthält, so handelt es sich bei dem anorganischen Bindemittel üblicherweise um ein siliciumhaltiges Bindemittel.

Vorzugsweise ist das anorganische Bindemittel ausgewählt aus Silanen, Silanhydrolysaten, Silikaten, Polysilikonaten und deren Mischungen.

Besonders gute Ergebnisse werden in diesem Zusammenhang erhalten, wenn das anorganische Bindemittel ausgewählt ist aus der Gruppe von Silanen, insbesondere Trialkoxysilanen und Tetraalkoxysilanen, vorzugsweise Vinylsilanen, Aminsilanen, Phenoxysilanen und/oder Epoxysilanen, Tetraethylorthosilikat (TEOS), Tetramethylorthosilikat (TMOS), Silanhydrolysaten, kolloidaler Kieselsäure, Wassergläsern bzw. Silikaten, insbesondere Lithiumwasserglas, Natriumwasserglas, Kaliumwasserglas und deren Mischungen. Insbesondere können vorzugsweise als Silane die Silane verwendet werden, die nachfolgend bei der Herstellung silanmodifizierter Silikate genannt sind.

Gemäß einer bevorzugten Ausführungsform der vorliegenden Erfindung ist das anorganische Bindemittel insbesondere frei von Lithiumverbindungen. Im Rahmen der vorliegenden Erfindung können besonders gute Beschichtungs- und Gleiteigenschaften auch dann erhalten werden, wenn auf das üblicherweise bevorzugt eingesetzte Lithiumpolysilikat (Lithiumwasserglas) verzichtet wird. Dies ist ein besonderer Vorteil der vorliegenden Erfindung, da der Lithiumbedarf und in der Folge voraussichtlich auch die Lithiumpreise aufgrund der zunehmenden Verbreitung von Lithiumionenbatterien und Lithiumionenakkumulatoren, insbesondere im Automobilbereich, steigen werden.

Vorzugsweise ist das anorganische Bindemittel ausgewählt aus der Gruppe von Silanen, insbesondere Trialkoxysilanen und Tetraalkoxysilanen, vorzugsweise Vinylsilanen, Aminsilanen, Phenoxysilanen und/oder Epoxysilanen, Tetraethylorthosilikat (TEOS), Tetramethylorthosilikat (TMOS), Silanhydrolysaten, kolloidaler Kieselsäure (Kieselsol), Natriumwasserglas, Kaliumwasserglas und deren Mischungen. Besonders bevorzugt ist das anorganische Bindemittel ausgewählt aus der Gruppe von Natriumwasserglas, Kaliumwasserglas und deren Mischungen.

Gemäß einer bevorzugten Ausführungsform der vorliegenden Erfindung weist das anorganische Bindemittel eine Mischung von Wasserglas und/oder kolloidaler Kieselsäure mit Silanhydrolysat und/oder Silan auf oder besteht aus dieser. Vorzugsweise besteht das anorganische Bindemittel aus einer Mischung von Wasserglas und/oder kolloidaler Kieselsäure mit Silanhydrolysat und/oder Silan. Auch diese Mischungen zeigen bei alkalischen pH-Werten keine Carbonatisierung.

Gemäß dieser Ausführungsform wird es bevorzugt, wenn das organische Bindemittel das Wasserglas und/oder die kolloidale Kieselsäure in einem gewichtsbezogenen Verhältnis zum Silanhydrolysat und/oder Silan im Bereich von 15: 1 bis 1 : 2, insbesondere 1 : 1 bis 1 : 1,5, vorzugsweise 5 : 1 bis 1 : 1, bevorzugt 4 : 1 bis 1 : 1, enthält.

Gleichermaßen hat es sich gemäß dieser Ausführungsform bewährt, wenn das anorganische Bindemittel, insbesondere vor Mischung mit dem organischen Bindemittel, auf einen pH-Wert kleiner 11, insbesondere kleiner 9, bevorzugt kleiner 8,5, eingestellt wird. Vorzugsweise wird anorganische Bindemittel, insbesondere vor Mischung mit dem organischen Bindemittel, auf einen pH-Wert kleiner 8, insbesondere im Bereich von pH 5 bis pH 7,5 eingestellt wird.

Bei Mischungen von Wassergläsern und/oder kolloidalen Kieselsäuren mit Silanhydrolysaten und/oder Silanen wird insbesondere eine deutlich schwächere oder ausbeleibendende Carbonatisiering, d.h die Aufnahme von Kohlenstoffdioxid aus der Luft mit anschließender Bildung von Carbonaten, insbesondere bei pH-Werten im alkalischen Bereich, beobachtet. Die Carbonatisierung führt insbesondere bei Topcoats zu einer ungewünschten Beeinträchtigung der Oberflächeneigenschaften, insbesondere der Optik, durch eine Trübung des Topcoats. Die Beschichtungen erscheinen dann oftmals staubig, was nicht gewünscht ist. Ein weiterer Vorteil der beschriebenen Mischungen ist, dass der pH-Wert des anorganischen Bindemittels und/oder der Beschichtungszusammensetzung im sauren Bereich eingestellt werden kann, ohne dass das Silikat bzw. die Kieselsäure ausfällt.

Besonders gute Ergebnisse werden in diesem Zusammenhang erhalten, wenn das anorganische Bindemittel eine silanmodifizierte Silikatverbindung bzw. ein silanmodifiziertes Wasserglas ist. Die silanmodifierte Silikatverbindung bzw. das silanmodifizierte Wasserglas wird üblicherweise durch ein mindestens teilweises Hydrolysieren und/oder Kondensieren mindestens eines Silans in Gegenwart mindestens eines Silikats bei einem pH-Wert gleich oder größer 8 erhalten.

Bei der Verwendung silanmodifizierter Silikatverbindungen bzw. silanmodifizierter Wassergläser wird gleichfalls keine Carbonatisierung beobachtet und der pH-Wert des anorganischen Bindemittels oder der Beschichtungszusammensetzung kann auf Werte kleiner oder gleich 7 eingestellt werden, ohne dass das Silkat ausfällt. Die pH-Werteinstellung kann dabei durch Zugeben von Säuren erfolgen. Eine Verwendung der silanmodifizierten Silikatverbindungen bzw. der silanmodifizierten Wassergläser im neutralen oder sauren pH-Bereich ist bevorzugt, insbesondere da im sauren Bereich die Absorption von Kohlenstoffdioxid in Form von Carbonaten deutlich reduziert ist.

Vorzugsweise wird das Verfahren zum Herstellen eines silanmodifizierten Silikats bzw. eines silanmodifizierten Wasserglases derart durchgeführt, dass eine Silan in Gegenwart einer Silikatverbindung bzw. eines Wasserglases bei einem pH-Wert gleich oder größer 8, insbesondere größer 11, mindestens teilweise hydrolysiert wird zu einem silanmodifizierten Silikat bzw. Wasserglas und anschließend der pH-Wert auf Werte kleiner 8,5, insbesondere kleiner 8, vorzugsweise im Bereich von 4 bis 7, eingestellt wird, insbesondere durch Zugabe von Säure.

Es ist auch möglich, beim Ansäuern einen pH-Wert zwischen 2 und 4 einzustellen, der erreicht und gehalten werden kann, ohne dass es zum Ausfällen oder Ausflocken der silanmodifizierten Silikatverbindung bzw. des silanmodifizierten Wasserglases kommt.

Eine vorteilhafte Wirkung zeigt sich bereits, wenn nur eine teilweise Hydrolyse bzw. Kondensation von Silan in Gegenwart von Silikaten in wässriger Lösung im Alkalischen erfolgt. Häufig wird die Hydrolyse bzw. Kondensation von Silan in Gegenwart von Silikaten zu einer silanmodifizierten Silikatverbindung bzw. einem silanmodifizierten Wasserglas jedoch vollständig im Alkalischen durchgeführt. Eine teilweise Hydrolyse von Silan und Silikat in wässriger alkalischer Lösung kann nach dem Ansäuern auf einen pH-Wert von 7 oder kleiner fortgesetzt werden, falls gewünscht bis hin zur vollständigen Hydrolyse.

Als Wasserglas bzw. Silikat werden auch gemäß dieser Ausführungsform insbesondere die zuvor genannten Verbindungen Lithiumwasserglas, Natriumwasserglas, Kaliumwasserglas und deren Mischungen eingesetzt, vorzugsweise Natriumwasserglas, Kaliumwasserglas und deren Mischungen.

Zur Herstellung von silanmodifizierten Silikatverbindungen bzw. Wassergläser wird vorteilhaft ein epoxyfunktionelles, phenoxyfunktionelles, vinylfunktionelles oder aminofunktionelles Silan eingesetzt. Besonders bevorzugt wird der Einsatz von Silanen, die mindestens eine Si-C-Bindung, also eine Bindung zwischen einem Silizium- und einem Kohlenstoffatom aufweisen. Verschiedene Silane können miteinander in Mischung eingesetzt werden. Besonders geeignete Silane sind Methacryloxymethyltrimethoxysilan, Methacryloxymethyltriethoxysilan, 3-aminopropylmethyldimethoxy silan, 3-aminopropyltriethoxysilan, N-(2-aminoethyl)-3-aminopropylmethyldimethoxy silan sowie 3-Mercaptopropyltrimethoxysilan, N-(2-Aminoethyl)-3-aminopropyltrimethoxysilan, N-(2-Aminoethyl)-3-aminopropyl-trimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)-propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)methyldimethoxysilan, Methacryloxymethyltrimethoxysilan, 3-Methacryloxypropyltriacetoxysilan, N-Methyl[3-(Trimethoxysilyl)propyl]carbamat, N-Trimethoxysilylmethyl-O-methylcarbamat, N-Dimethoxy(methyl)silylmethyl-O-methylcarbamat, Tris-[3-(trimethoxysilyl)propyl]-isocyanurat, 3-Glycidoxypropyltrimethoxysilan , 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan, 1,2-Bis(triethoxysilyl)ethan.

Bei der Herstellung der silanmodifizierten Silikate werden Silan und Silikat jeweils vorteilhaft in einem Gewichtsverhältnis von 2 : 1 bis 1 : 10, insbesondere 1 : 1 bis 1 : 5, vorzugsweise 1 : 1 bis 1 : 3, bevorzugt 1 : 1 bis 1 : 2, eingesetzt. Dabei kann das Silan als einzelne Verbindung oder als Mischung von Silanen eingesetzt werden, gleiches gilt für das Silikat. Für weitergehende Einzelheiten zur Herstellung silanmodifizierter Silikate bzw. Wassergläser kann auf die WO 2016/107791 A1 verwiesen werden, deren diesbezüglicher Offenbarungsgehalt vollumfänglich von der vorliegenden Erfindung mitumfasst ist.

Wenn die Beschichtungszusammensetzung ein anorganisches Bindemittel enthält, so enthält die Beschichtungszusammensetzung das anorganische Bindemittel üblicherweise in Mengen von 1 bis 30 Gew.-%, insbesondere 2 bis 25 Gew.-%, vorzugsweise 3 bis 20 Gew.-%, bevorzugt 5 bis 15 Gew.-%, bezogen auf die Beschichtungszusammensetzung.

Wenn die Beschichtungszusammensetzung ein anorganisches Bindemittel enthält, so hat es sich bewährt, wenn die Beschichtungszusammensetzung das organische Bindemittel in Mengen von 1 bis 40 Gew.-%, insbesondere 2 bis 30 Gew.-%, vorzugsweise 3 bis 25 Gew.-%, bevorzugt 5 bis 20 Gew.-%, bezogen auf die Beschichtungszusammensetzung, enthält.

Durch eine Kombination von organischem Bindemittel und einem anorganischen Bindemittel werden im Rahmen der vorliegenden Erfindung die besten Ergebnisse erhalten.

Im Rahmen der vorliegenden Erfindung hat es sich bewährt, wenn die Beschichtungszusammensetzung einen Gesamtgehalt an Bindemittel, d.h. die Summe von organischem und anorganischem Bindemittel, in Mengen von 2 bis 70 Gew.-%, insbesondere 5 bis 60 Gew.-%, vorzugsweise 10 bis 50 Gew.-%, bevorzugt 15 bis 40 Gew.-%, bezogen auf die Beschichtungszusammensetzung, enthält.

Eine bevorzugte Beschichtungszusammensetzung enthält somit
(a1) ein organisches Bindemittel, wobei das Bindemittel ein Copolymer aus mindestens einem ungesättigten Kohlenwasserstoff und mindestens einer ungesättigten Carbonsäure aufweist,
(a2) ein anorganisches Bindemittel und
(b) ein Schmiermittel
enthält.

Für diese bevorzugte Ausführungsform der vorliegenden Erfindung gelten alle Besonderheiten, Merkmale sowie Vorteile, welche zuvor im Zusammenhang mit den weiteren Ausführungsformen und Merkmalen genannt sind, entsprechend.

Gemäß einer weiteren bevorzugten Ausführungsform der vorliegenden Erfindung enthält die Beschichtungszusammensetzung
(a1) ein organisches Bindemittel, wobei das Bindemittel ein Copolymer aus mindestens einem ungesättigten Kohlenwasserstoff und mindestens einer ungesättigten Carbonsäure aufweist,
(a2) ein anorganisches Bindemittel,
(b) ein Schmiermittel und
(c) einen Verdicker und/oder ein Rheologieadditiv.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Gemäß einer bevorzugten Ausführungsform der vorliegenden Erfindung ist es somit vorgesehen, dass die Beschichtungszusammensetzung
(a1) ein organisches Bindemittel, wobei das Bindemittel ein Copolymer aus mindestens einem ungesättigten Kohlenwasserstoff und mindestens einer ungesättigten Carbonsäure aufweist,
(a2) ein anorganisches Bindemittel,
(b) ein Schmiermittel,
(c) einen Verdicker und/oder ein Rheologieadditiv und
(d) ein weiteres Additiv.

Für diese bevorzugte Ausführungsform der vorliegenden Erfindung gelten alle Vorteile, Merkmale und Besonderheiten, welche zuvor im Zusammenhang mit den weiteren Ausführungsformen und Merkmalen der erfindungsgemäßen Beschichtungszusammensetzung genannt wurden, entsprechend.

Gemäß einer bevorzugten Ausführungsform der vorliegenden Erfindung ist es somit vorgesehen, dass die Beschichtungszusammensetzung
(a1) ein organisches Bindemittel, wobei das Bindemittel ein Copolymer aus mindestens einem ungesättigten Kohlenwasserstoff und mindestens einer ungesättigten Carbonsäure aufweist,
(a2) ein anorganisches Bindemittel,
(b) ein Schmiermittel,
(c) einen Verdicker und/oder ein Rheologieadditiv,
(d) ein weiteres Additiv und
(e) plättchenförmige Partikel
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Weiterhin kann es vorgesehen sein, dass die Beschichtungszusammensetzung einen Füllstoff enthält.

Wenn die Beschichtungszusammensetzung einen Füllstoff enthält, so enthält die Beschichtungszusammensetzung den Füllstoff üblicherweise in Mengen von 0,5 bis 50 Gew.-%, insbesondere 1 bis 40 Gew.-%, vorzugsweise 5 bis 35 Gew.-%, bevorzugt 10 bis 30 Gew.-%, bezogen auf die Beschichtungszusammensetzung.

Besonders gute Ergebnisse werden erhalten, wenn der Füllstoff ausgewählt ist aus Calciumcarbonat, Bariumsulfat, Talkum und deren Mischungen.

Gemäß einer bevorzugten Ausführungsform der vorliegenden Erfindung ist es daher vorgesehen, dass die Beschichtungszusammensetzung
(a1) ein organisches Bindemittel, wobei das Bindemittel ein Copolymer aus mindestens einem ungesättigten Kohlenwasserstoff und mindestens einer ungesättigten Carbonsäure aufweist,
(b) ein Schmiermittel,
(c) einen Verdicker und/oder ein Rheologieadditiv
(d) ein weiteres Additiv und
(e) einen Füllstoff
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Gemäß einer weiteren bevorzugten Ausführungsform der vorliegenden Erfindung ist es somit vorgesehen, dass die Beschichtungszusammensetzung
(a1) ein organisches Bindemittel, wobei das Bindemittel ein Copolymer aus mindestens einem ungesättigten Kohlenwasserstoff und mindestens einer ungesättigten Carbonsäure aufweist,
(a2) ein anorganisches Bindemittel,
(b) ein Schmiermittel,
(c) einen Verdicker und/oder ein Rheologieadditiv,
(d) ein weiteres Additiv,
(e) plättchenförmige Partikel und
(f) einen Füllstoff
enthält.

Für diese besondere Ausführungsform der vorliegenden Erfindung gelten alle Vorteile, Merkmale und Besonderheiten, welche zuvor im Zusammenhang mit den weiteren Ausführungsformen und Merkmalen der vorliegenden Erfindung genannt wurden, entsprechend.

Wie zuvor ausgeführt ist die erfindungsgemäße Zusammensetzung eine wässrige Zusammensetzung, d.h. die erfindungsgemäße Zusammensetzung enthält Wasser als Lösungs- oder Dispergiermittel. Üblicherweise enthält die erfindungsgemäße Zusammensetzung Wasser in Mengen von 40 bis 98 Gew.-%, insbesondere 50 bis 95 Gew.-%, vorzugsweise 60 bis 90 Gew.-%, bevorzugt 60 bis 85 Gew.-%, bezogen auf die Beschichtungszusammensetzung.

Darüber hinaus weist die Beschichtungszusammensetzung vorzugsweise nur geringe Mengen an organischen Lösemitteln und flüchtigen organischen Verbindungen (Volatile Organic Compounds, VOC) auf. Üblicherweise enthält die Beschichtungszusammensetzung organische Lösemittel und flüchtige organische Verbindungen in Mengen von weniger als 3 Gew.-%, insbesondere weniger als 1 Gew.-%, vorzugsweise weniger als 0,5 Gew.-%, bevorzugt weniger als 0,3 Gew.-%, besonders bevorzugt weiniger als 0,1 Gew.-%, bezogen auf die Beschichtungszusammensetzung. Vorzugsweise ist die Beschichtungszusammensetzung frei von organischen Lösemitteln und flüchtigen organischen Verbindungen.

Was nun die Viskosität der erfindungsgemäßen Beschichtungszusammensetzung anbelangt, so kann diese in weiten Bereichen variieren. Besonders gute Ergebnisse werden im Rahmen der vorliegenden Erfindung jedoch erhalten, wenn die Beschichtungszusammensetzung eine dynamische Viskosität bei 20 °C nach Brookfield im Bereich von 2 bis 5.000 mPas, insbesondere 5 bis 1.000 mPas, vorzugsweise 5 bis 500 mPas, bevorzugt 10 bis 100 mPas, insbesondere bevorzugt 30 bis 50 mPas, aufweist. Mit Viskositäten in den vorgenannten Bereichen können besonders dünne und gleichmäßige Topcoat-Beschichtungen erhalten werden.

Weiterer Gegenstand der vorliegenden Erfindung - gemäß einem **zweiten** Aspekt der vorliegenden Erfindung - ist die Verwendung einer vorgenannten Beschichtungszusammensetzung als Topcoat zur Erzeugung einer Beschichtung mit gezielt einstellbarer Reibzahl auf einem metallischen Substrat, insbesondere einem mit einer kathodischen Korrosionsschutzbeschichtung versehenen metallischen Substrat.

Für weitergehende Einzelheiten zu diesem Erfindungsaspekt kann auf die Ausführungen zu den übrigen Erfindungsaspekten verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein Verfahren zur Herstellung einer Beschichtung mit einstellbarer Reibzahl, wobei
(a) in einem ersten Verfahrensschritt ein Substrat, welches zumindest bereichsweise mit einer kathodischen Korrosionsschutzbeschichtung versehen ist, vorgelegt wird,
(b) in einem auf den ersten Verfahrensschritt (a) folgenden zweiten Verfahrensschritt eine zuvor beschriebene Beschichtungszusammensetzung zumindest bereichsweise auf das Substrat, insbesondere die kathodische Korrosionsschutzbeschichtung, aufgebracht wird und
(c) in einem auf den zweiten Verfahrensschritt (b) folgenden dritten Verfahrensschritt die im zweiten Verfahrensschritt (b) aufgebrachte Beschichtungszusammensetzung getrocknet wird.

Im Rahmen der vorliegenden Erfindung wird es insbesondere bevorzugt, wenn im dritten Verfahrensschritt (c) die im zweiten Verfahrensschritt (b) auf das Substrat aufgebrachte Beschichtungszusammensetzung ausgehärtet und/oder vernetzt wird.

Üblicherweise weist das Substrat ein Metall auf oder besteht aus einem Metall. Vorzugsweise besteht das Substrat aus einem Metall. Besonders guter Ergebnisse werden in diesem Zusammenhang erhalten, wenn das Metall ausgewählt ist aus der Gruppe von Eisen, Aluminium, Magnesium und deren Mischungen und Legierungen.

Im Rahmen der vorliegenden Erfindung wird es besonders bevorzugt, wenn das Metall ausgewählt ist aus Eisen und dessen Legierungen, insbesondere ein Stahl ist.

Unter einem Substrat ist im Rahmen der vorliegenden Erfindung ein Objekt zu verstehen, welches mit der Beschichtungszusammensetzung beschichtet werden kann.

Üblicherweise ist das Substrat im Rahmen der vorliegenden Erfindung ausgewählt aus Blechen, Formteilen, Kleinteilen und deren Mischungen.

Besonders bevorzugt wird es in diesem Zusammenhang, wenn das Substrat ein Kleinteil ist, vorzugsweise Massenschüttgut, insbesondere ausgewählt aus Schrauben, Muttern, Bolzen, Unterlegscheiben, Nieten und deren Mischungen.

Besonders bevorzugt ist es im Rahmen der vorliegenden Erfindung, wenn das Substrat eine Schraube oder eine Mutter ist, insbesondere eine Schraube.

Speziell bei Schrauben kommen die spezifischen Vorteile der erfindungsgemäßen Beschichtungszusammensetzung und des erfindungsgemäßen Verfahrens, nämlich die gezielte Einstellung der Reibzahl, besonders zum Tragen.

Was die kathodische Korrosionsschutzbeschichtung anbelangt, welche zumindest bereichsweise, vorzugsweise vollflächig, auf das Substrat aufgebracht ist, so weist diese üblicherweise ein Metall ausgewählt aus der Gruppe von Zink, Aluminium, Magnesium, Nickel und deren Mischungen und Legierungen auf.

Vorzugsweise weist die kathodische Korrosionsschutzbeschichtung Zink und dessen Legierungen auf.

Es hat sich im Rahmen der vorliegenden Erfindung bewährt, wenn die kathodische Korrosionsschutzbeschichtung ausgewählt ist aus der Gruppe von zinkhaltigen Beschichtungen, insbesondere galvanischen Zinkbeschichtungen, insbesondere galvanischen Zink-Nickel-Beschichtungen, Feuerverzinkungsbeschichtungen, Zinkpulverbeschichtungen, insbesondere Zinklacken, und Zinklamellenbeschichtungen. Vorzugsweise ist die kathodische Korrosionsschutzbeschichtung ausgewählt aus der Gruppe von galvanischen Zinkbeschichtungen, insbesondere galvanischen Zink-Nickel-Beschichtungen, Zinkpulverbeschichtungen und Zinklamellenbeschichtungen. Zinkpulverbeschichtungen und Zinklamellenbeschichtungen können dabei insbesondere auch aus Zinklegierungen bestehen.

Vorzugsweise weisen die Zinklegierungen neben Zink noch Aluminium und/oder Magnesium auf, vorzugweise Aluminium und Magnesium.

Im Rahmen der vorliegenden Erfindung hat es sich bewährt, wenn in Verfahrensschritt (b) die Beschichtungszusammensetzung mit einer Schichtdicke im Bereich von 1 bis 12 µm, insbesondere 1 bis 10 µm, vorzugsweise 1 bis 8 µm, besonders bevorzugt 2 bis 8 µm, ganz besonders bevorzugt 2 bis 7 µm, auf das Substrat bzw. die kathodische Korrosionsschutzbeschichtung aufgebracht wird.

Die Beschichtungszusammensetzung kann dabei in Verfahrensschritt (b) durch jedes geeignete Verfahren aufgebracht werden.

Üblicherweise wird in Verfahrensschritt (b) die Beschichtungszusammensetzung jedoch mittels Spritzen, Streichen, Rakeln, Walzen, Tauchen oder Tauchschleudern auf das Substrat aufgebracht. Besonders gute Ergebnisse werden dabei erhalten, wenn in Verfahrensschritt (b) die Beschichtungszusammensetzung mittels Tauchen oder Tauchschleudern aufgebracht wird. Tauchen oder Tauchschleudern eignet sich insbesondere zur Beschichtung von Massenschuttgütern, wie beispielsweise Kleinteilen. Besonders bevorzugt wird es im Rahmen der vorliegenden Erfindung, wenn die Beschichtungszusammensetzung vollflächig an das Substrat bzw. die kathodische Korrosionsschutzbeschichtung aufgebracht wird.

Die Temperatur, bei welcher die Beschichtungszusammensetzung in Verfahrensschritt (c) getrocknet wird, kann in Abhängigkeit des gewählten Substrats sowie der darauf aufgebrachten kathodischen Korrosionsschutzbeschichtung und der aufgebrachten Beschichtungszusammensetzung in weiten Bereichen variieren.

Es hat sich jedoch als zweckdienlich erwiesen, wenn in Verfahrensschritt (c) die Beschichtungszusammensetzung bei Temperaturen im Bereich von 20 bis 300 °C, insbesondere 30 bis 250 °C, vorzugsweise 40 bis 200 °C, bevorzugt 50 bis 180 °C, besonders bevorzugt 55 bis 160 °C, ganz besonders bevorzugt 60 bis 150 °C, getrocknet wird.

Bei den vorgenannten Temperaturen findet üblicherweise eine schnelle Trocknung bzw. Härtung und/oder Vernetzung der Bindemittelsysteme statt, wobei eine Zersetzung des organischen Bindemittels vermieden wird.

Gleichermaßen hat es sich als zweckmäßig erwiesen, wenn in Verfahrensschritt (c) die Beschichtungszusammensetzung für einen Zeitraum von 1 bis 30 Minuten, insbesondere 2 bis 25 Minuten, vorzugsweise 3 bis 20 Minuten, bevorzugt 5 bis 15 Minuten, getrocknet wird.

Wie zuvor dargelegt, ist es im Rahmen der vorliegenden Erfindung möglich, die Reibzahl der resultierenden Beschichtung, insbesondere des Topcoats, gezielt einzustellen. Besonders gute Ergebnisse werden dabei erhalten, wenn die Reibzahl des beschichteten Substrats durch die Aufbringung der Beschichtungszusammensetzung im Bereich von 0,09 bis 0,16, bestimmt nach DIN EN ISO 16047:2013-01, eingestellt wird. Die Einstellung der Reibzahl erfolgt dabei insbesondere durch die Menge an organischem Bindemittel und die Art und die Mengen an Schmiermittel.

Für weitergehende Einzelheiten zu diesem Erfindungsaspekt kann auf die vorigen Ausführungen zu den übrigen Erfindungsaspekten verwiesen werden, welche in Bezug auf die erfindungsgemäße Verwendung entsprechend gelten.

Schließlich ist weiterer Gegenstand der vorliegenden Erfindung - gemäß einem **vierten** Aspekt der vorliegenden Erfindung - ein metallisches Substrat aufweisend eine Beschichtung, welche insbesondere mit einer vorgenannten Beschichtungszusammensetzung oder nach einem vorbeschriebenen Verfahren erhältlich ist.

Üblicherweise weist das Substrat zwischen der, d.h. der ausgehärteten Beschichtungszusammensetzung, insbesondere dem Topcoat, noch eine kathodische Korrosionsschutzbeschichtung auf, insbesondere in Form eines Basecoats.

Im Rahmen der Erfindung wird es bevorzugt, wenn die Beschichtung das Schmiermittel in Mengen von 1 bis 25 Gew.-%, insbesondere 1 bis 20 Gew.-%, vorzugsweise 1,5 bis 17 Gew.-%, bevorzugt 2 bis 15 Gew.-%, besonders bevorzugt 2,5 bis 12 Gew.-%, bezogen auf die Beschichtung, enthält.

Üblicherweise enthält die Beschichtung, insbesondere der Topcoat, das organische Bindemittel in Mengen von 60 bis 99 Gew.-%, insbesondere 65 bis 99 Gew.-%, vorzugsweise 70 bis 98 Gew.-%, bevorzugt 75 bis 97 Gew.-%, besonders bevorzugt 80 bis 96 Gew.-%, bezogen auf die Beschichtung, insbesondere den Topcoat.

Wenn im Rahmen der vorliegenden Erfindung eine Mischung aus organischen und anorganischen Bindemitteln verwendet wird, so hat es sich bewährt, wenn die Beschichtung, insbesondere der Topcoat, das organische Bindemittel in Mengen von 25 bis 70 Gew.-%, insbesondere 30 bis 65 Gew.-%, vorzugsweise 35 bis 60 Gew.-%, bevorzugt 40 bis 55 Gew.-%, besonders bevorzugt 43 bis 53 Gew.-%, bezogen auf die Beschichtung, insbesondere den Topcoat, enthält.

Gleichermaßen wird es im Rahmen der vorliegenden Erfindung gemäß dieser Ausführungsform bevorzugt, wenn die Beschichtung, insbesondere der Topcoat, das anorganische Bindemittel in Mengen von 25 bis 70 Gew.-%, insbesondere 30 bis 65 Gew.-%, vorzugsweise 35 bis 65 Gew.-%, bevorzugt 40 bis 55 Gew.-%, besonders bevorzugt 43 bis 53 Gew.-%, bezogen auf die Beschichtung, insbesondere den Topcoat, enthält.

Es hat sich weiterhin bewährt, wenn das gewichtsbezogene Verhältnis von organischem Bindemittel zu anorganischem Bindemittel im Bereich von 1,5 : 1 bis 1 : 2, insbesondere 1,5 : 1 bis 1 : 1,5, vorzugweise 1,1 : 1 bis 1: 1,1, bezogen auf das Gewicht an organischem Bindemittel und das Gewicht an anorganischem Bindemittel in der Beschichtung, insbesondere dem Topcoat, liegt.

Ebenfalls wird ist es bevorzugt, wenn die Beschichtung, insbesondere der Topcoat, die plättchenförmigen Partikel in Mengen von 0,5 bis 20, insbesondere 1 bis 15 Gew.-%, vorzugsweise 1,5 bis 12 Gew.-%, bevorzugt 1,5 bis 10 Gew.-%, bezogen auf die Beschichtung, insbesondere den Topcoat, enthält.

Besonders gute Ergebnisse werden in diesem Zusammenhang erhalten, wenn die Beschichtung eine Gesamtmenge an Schmiermittel und plättchenförmigen Partikeln im Bereich von von 1,5 bis 45 Gew.-%, insbesondere 2 bis 35 Gew.-%, vorzugsweise 3,5 bis 25 Gew.-%, bevorzugt 4 bis 20 Gew.-%, bezogen auf die Beschichtungszusammensetzung, enthält.

Die Beschichtung, insbesondere der Topcoat, weist dabei vorzugsweise eine Schichtdicke im Bereich von 1 bis 10 µm, insbesondere 1 bis 8 µm, vorzugsweise 1 bis 7 µm, bevorzugt 2 bis 7 µm, besonders bevorzugt 2 bis 6 µm, auf.

Weiterhin wird es bevorzugt, wenn die Reibzahl des beschichteten Substrats im Bereich von 0,09 bis 0,16, bestimmt nach DIN EN ISO 16047:2013-01, variiert.

Für weitergehende Einzelheiten zu dem erfindungsgemäßen Substrat kann auf die obigen Ausführungen zu den übrigen Erfindungsaspekten verwiesen werden, welche in Bezug auf die erfindungsgemäße Substrat entsprechend gelten.

Der Gegenstand der vorliegenden Erfindung wird nachfolgend anhand der Ausführungsbeispiele in exemplarischer und nicht beschränkender Weise verdeutlicht.

### Ausführungsbeispiele

Um die vorliegende Erfindung und ihre Vorzüge weiter zu verdeutlichen, wurden mehrere Versuchsreihen mit erfindungsgemäßen Topcoat-Zusammensetzungen durchgeführt, welche auf Schrauben aufgebracht werden. Anschließend werden die Gleit- und Reibeigenschaften der Schrauben bestimmt.

### 1. Beispiele 1 bis 3

Zunächst werden die Eigenschaften einer Topcoat-Zusammensetzung untersucht, welche ausschließlich ein organisches Bindemittel auf Basis eines Acrylsäureester/Methacrylsäureester/Styrol-Copolymers aufweist, untersucht. Den Zusammensetzungen werden mikronisierte Polyethylenwachse und Verdicker (RheoByk 7420 ES und Optigel) zugegeben. Die Beschichtungszusammensetzungen sind in der nachfolgenden Tabelle 1 angegeben.

**Tabelle 1: Topcoat-Zusammensetzungen mit organischem Bindemittel**

| Zusammensetzung | 1 | 2 | 3 |
|---|---|---|---|
| | | | |
| Acrylsäureester/MethacrylsäureEster/Styrol-Copolymer [Gew.-%] | 13 | 13 | 13 |
| Mikronisiertes PE-Wachs [Gew.-%] | 3 | 3 | 3 |
| RheoByk 7420 ES [Gew.-%] | 0,3 | 0,9 | - |
| Optigel [Gew.-%] | - | - | 10,0 |
| Wasser [Gew.-%] | 83,7 | 83,1 | 77 |

Mittels Tauchschleudern werden die Beschichtungszusammensetzungen mit einer Schichtdicke von 7 µm vollflächig auf Schrauben aufgebracht und anschließend bei 120 °C für 20 Minuten getrocknet.

Die Schrauben werden anschließend einer Reibzahlbestimmung gemäß DIN EN ISO 16047:2013-01 unterzogen. Es zeigt sich, dass sowohl die Gesamtreibzahl als auch die Reibzahl im Kopf und Gewinde jeweils im vorgegebenen VDA-Fenster von 0,09 bis 0,16 liegen.

Zur weiteren Untersuchung wird der Mehrfachanzug (5 Anzüge) auf einer Stahloberfläche, einer mit einer organischen kathodischen Tauchlackierung (KTL) versehenen Oberfläche sowie einer Aluminiumoberfläche untersucht. Hierbei zeigt sich, dass das Reibzahlfenster bei Mehrfachanzügen nur auf Stahl eingehalten wird. Alle drei Beschichtungszusammensetzungen zeigen ein exzellentes Warmlöseverhalten. Die Werte sind in der nachfolgenden Tabelle 2 angegeben.

**Tabelle 2: Untersuchung der Reib- und Gleiteigenschaften**

| Zusammensetzung | 1 | 1 | 3 |
|---|---|---|---|
| RZ gesamt | 0,114 | 0,106 | 0,095 |
| | 0,104-0,123 | 0,098-0,113 | 0,088-0,104 |
| RZ Kopf | 0,110 | 0,094 | 0,084 |
| | 0,101-0,132 | 0,088-0,099 | 0,076-0,091 |
| RZ Gewinde | 0,119 | 0,122 | 0,109 |
| | 0,108-0,130 | 0,111-0,142 | 0,100-0,121 |
| Mehrfachanzug Stahl | 10,117 | 10,110 | 1 0,105 |
| | 30,121 | 30,120 | 30,110 |
| | µₜₒₜ¹ 0,117-0,129 | µₜₒₜ 0,110-0,124 | µₜₒₜ 0,105-0,111 |
| | µₜₕ² 0,126-0,126 | µₜₕ 0,112-0,121 | µₜₕ 0,114-0,110 |
| | µ_{b}³ 0,110-0,131 | µ_{b} 0,108-0,126 | µ_{b} 0,099-0,112 |
| Mehrfachanzug KTL | 1 0,083 | 1 0,080 | 1 0,077 |
| | 5 0,082 | 5 0,079 | 5 0,078 |
| | µₜₒₜ 0,083-0,082 | µₜₒₜ 0,080-0,079 | µₜₒₜ 0,077-0,078 |
| | µₜₕ 0,079-0,076 | µₜₕ 0,079-0,077 | µₜₕ 0,077-0,080 |
| | µ_{b} 0,085-0,086 | µ_{b} 0,080-0,080 | µ_{b} 0,077-0,077 |
| Mehrfachanzug Alu | 1 0,080 | 1 0,080 | 1 0,077 |
| | 2 0,081 | 2 0,080 | 2 0,079 |
| | µₜₒₜ 0,080-0,081 | µₜₒₜ 0,080-0,080 | µₜₒₜ 0,077-0,079 |
| | µₜₕ 0,078-0,072 | µₜₕ 0,080-0,074 | µₜₕ 0,076-0,074 |
| | µ_{b} 0,081-0,087 | µ_{b} 0,080-0,084 | µ_{b} 0,078-0,083 |
| Schichtgewicht | 0,023 | 0,027 | 0,038 |
| Warmlösen | 0,064 | 0,062 | 0,063 |

| | | | |
|---|---|---|---|
| ¹ µₜₒₜ : Gesamtreibzahl ² µₜₕ : Reibzahl am Gewinde ³ µ_{b} : Reibzahl am Kopf | | | |

### 2. Beispiele 4 und 5

Ergänzend zu den obigen Versuchen 1 bis 3 werde Versuche mit einem Acrylsäure-Copolymer als Bindemittel durchgeführt. Die Zusammensetzungen sind in der nachfolgenden Tabelle 3 angegeben und die Untersuchen der Reib- und Gleiteigenschaften in der nachfolgenden Tabelle 4. Auch aus Tabelle 4 lässt sich entnehmen, dass die Warmlöseeigenschaften der Zusammensetzung 4 und 5 hervorragend sind. Auch die Reibzahlen liegen stets im VDA-Fenster. Dies auch bei einem Mehrfachanzug, und zwar sowohl auf Stahl, einer KTL als auch auf Aluminium.

**Tabelle 3: Topcoat-Zusammensetzungen mit organischem Bindemittel**

| Zusammensetzung | 4 | 5 |
|---|---|---|
| | | |
| Acrylsäure -Copolymer [Gew.-%] | 18 | 18 |
| Mikronisiertes PE-Wachs [Gew.-%] | 2 | 2 |
| RheoByk 7420 ES [Gew.-%] | 0,3 | - |
| Optigel [Gew.-%] | - | 5 |
| Wasser [Gew.-%] | 78,7 | 75 |

**Tabelle 4: Untersuchung der Reib- und Gleiteigenschaften**

| Zusammensetzung | 4 | 5 |
|---|---|---|
| RZ gesamt | 0,123 | 0,116 |
| | 0,104-0,132 | 0,102-0,122 |
| RZ Kopf | 0,129 | 0,122 |
| | 0,106-0,144 | 0,113-0,127 |
| RZ Gewinde | 0,116 | 0,109 |
| | 0,102-0,123 | 0,089-0,119 |
| Mehrfachanzug Stahl | 10,111 | 10,112 |
| | 30,110 | 30,113 |
| | µₜₒₜ¹ 0,111-0,114 | µₜₒₜ 0,112-0,114 |
| | µₜₕ² 0,112-0,098 | µₜₕ 0,114-0,100 |
| | µ_{b}³ 0,110-0,125 | µ_{b} 0,112-0,124 |
| Mehrfachanzug KTL | 10,107 | 1 0,097 |
| | 50,124 | 50,113 |
| | µₜₒₜ 0,107-0,124 | µₜₒₜ 0,097-0,113 |
| | µₜₕ 0,099-0,097 | µₜₕ 0,096-0,091 |
| | µ_{b} 0,114-0,142 | µ_{b} 0,098-0,129 |
| Mehrfachanzug Alu | 10,121 | 10,116 |
| | 20,128 | 20,126 |
| | µₜₒₜ 0,121-0,128 | µₜₒₜ 0,116-0,126 |
| | µₜₕ 0,095-0,090 | µₜₕ 0,100-0,098 |
| | µ_{b} 0,140-0,156 | µ_{b} 0,127-0,147 |
| Schichtgewicht | 0,009 | 0,015 |
| Warmlösen | 0,063 | 0,063 |

| | | |
|---|---|---|
| ¹ µₜₒₜ : Gesamtreibzahl ² µₜₕ : Reibzahl am Gewinde ³ µ_{b} : Reibzahl am Kopf | | |

### 3. Beispiele 6 bis 9

In den Beispielen 6 bis 9 wird eine Mischung aus einem organischen Ethylen-Acrylsäure-Copolymer und einem anorganischen Bindemittel in Form eines kolloidalen Kieselsols verwendet. Den Zusammensetzungen 6 bis 9 sind jeweils Verdicker sowie mikronisierte Polyethylenwachse in Mengen von 1 Gew.-% zugesetzt.

Die Zusammensetzungen sind in der nachfolgenden Tabelle 5 angegeben. Die Zusammensetzungen werden wieder auf die Schrauben aufgebracht und auf ihre Reibeigenschaften hin untersucht. Die Ergebnisse der Versuche sind in der nachfolgenden Tabelle 6 wiedergegeben. Es zeigt sich, dass die Reibzahlen stets im gewünschten VDA-Fenster liegen.

**Tabelle 5: Topcoat-Zusammensetzungen mit organischem und anorganischem Bindemittel**

| Zusammensetzung | 6 | 7 | 8 | 9 |
|---|---|---|---|---|
| | | | | |
| Ethylen-Acrylsäure -Copolymer [Gew.-%] | 20 | 20 | 20 | 20 |
| Kolloidales Kieselsol [Gew.-%] | 13 | 13 | 13 | 13 |
| Mikronisiertes PE-Wachs [Gew.-%] | 1 | 1 | 1 | 1 |
| RheoByk 7420 ES [Gew.-%] | 0,9 | 0,8 | - | - |
| Optigel [Gew.-%] | - | - | 5 | - |
| Wasser [Gew.-%] | 78,7 | 78,1 | 69 | |

**Tabelle 6: Untersuchung der Reib- und Gleiteigenschaften**

| Zusammensetzung | 6 | 7 | 8 | 9 |
|---|---|---|---|---|
| RZ gesamt | 0,116 | 0,110 | 0,109 | 0,117 |
| | 0,113-0,120 | 0,099-0,114 | 0,104-0,113 | 0,111-0,121 |
| RZ Kopf | 0,119 | 0,110 | 0,110 | 0,115 |
| | 0,109-0,125 | 0,093-0,117 | 0,103-0,114 | 0,107-0,120 |
| RZ Gewinde | 0,112 | 0,112 | 0,107 | 0,120 |
| | 0,103-0,123 | 0,105-0,119 | 0,102-0,112 | 0,112-0,129 |
| Schichtgewicht | 0,040 | 0,033 | 0,035 | 0,019 |
| Auslaufzeit | 30" | 27" | 32" | 25" |
| Warmlösen | - | - | - | 0,070 |

### 4. Beispiele 10 bis 17

Weiterhin werden zwei Versuchsreihen durchgeführt, bei welchen einerseits ein organisches Bindemittel auf Basis eines Acrylsäure-Copolymers eingesetzt wird (Beispiele 10 bis 13). Ergänzend wird in einer zweiten Versuchsreihe (Beispiele 14 bis 17) ein anorganisches Bindemittel in Form eines kolloidalen Kieselsols eingesetzt.

Die Zusammensetzungen der Versuchsreihe 1 (Beispiele 10 bis 13) sind in Tabelle 7 angegeben und die Beispiele der Versuchsreihe 2 (Beispiele 14 bis 17) in Tabelle 9.

Die Zusammensetzungen werden jeweils auf Schrauben aufgebracht und auf Ihre Gleit- und Reibeigenschaften untersucht. Die Ergebnisse dieser Versuche sind in den Tabellen 8 und 10 wiedergegeben.

Es zeigt sich, dass sowohl die Topcoats 10 bis 13 mit einem rein organischen Bindemittel als auch die Topcoats 14 bis 17 mit einer Mischung aus einem organischen und einem anorganischen Bindemittel hervorragende Eigenschaften aufweisen.

Sämtliche Topcoats erfüllen im Hinblick auf die Reibzahlen und sowohl im Hinblick auf die Gesamtreibzahl als auch im Hinblick auf die Reibzahl am Kopf sowie die Reibzahl am Gewinde, die Vorgaben des VDA. Auch das Warmlöseverhalten ist stets akezeptabel.

**Tabelle 7: Topcoat-Zusammensetzungen mit organischem Bindemittel**

| Zusammensetzung | 10 | 11 | 12 | 13 |
|---|---|---|---|---|
| | | | | |
| Ethylen-Acrylsäure -Copolymer [Gew.-%] | 15 | 15 | 15 | 15 |
| Mikronisiertes PE-Wachs [Gew.-%] | 1 | 1 | 1 | 1 |
| RheoByk 7420 ES [Gew.-%] | 0,9 | - | - | - |
| Optigel [Gew.-%] | - | 5 | 10 | - |
| Wasser [Gew.-%] | 83,1 | 79 | 74 | 84 |

**Tabelle 8: Untersuchung der Reib- und Gleiteigenschaften**

| Zusammensetzung | 10 | 11 | 12 | 13 |
|---|---|---|---|---|
| RZ gesamt | 0,122 | 0,123 | 0,112 | 0,116 |
| | 0,117-0,129 | 0,118-0,127 | 0,102-0,121 | 0,113-0,119 |
| RZ Kopf | 0,120 | 0,124 | 0,108 | 0,128 |
| | 0,111-0,125 | 0,120-0,128 | 0,104-0,114 | 0,125-0,131 |
| RZ Gewinde | 0,125 | 0,122 | 0,118 | 0,101 |
| | 0,112-0,137 | 0,109-0,136 | 0,100-0,130 | 0,094-0,108 |
| Schichtgewicht | 0,013 | 0,011 | 0,014 | - |
| Auslaufzeit | 30" | 29" | 34" | - |
| Warmlösen | 0,053 | 0,064 | 0,062 | 0,060 |

**Tabelle 9: Topcoat-Zusammensetzungen mit organischem und anorganischem Bindemittel**

| Zusammensetzung | 14 | 15 | 16 | 17 |
|---|---|---|---|---|
| | | | | |
| Ethylen-Acrylsäure -Copolymer [Gew.-%] | 15 | 15 | 15 | 15 |
| Kolloidales Kieselsol [Gew.-%] | 13 | 13 | 13 | 13 |
| Mikronisiertes PE-Wachs [Gew.-%] | 1 | 1 | 1 | 1 |
| RheoByk 7420 ES [Gew.-%] | 0,9 | 0,8 | - | - |
| Optigel [Gew.-%] | - | - | 5 | - |
| Wasser [Gew.-%] | 70,1 | 70,2 | 66 | 71 |

**Tabelle 10: Untersuchung der Reib- und Gleiteigenschaften**

| Zusammensetzung | 14 | 15 | 16 | 17 |
|---|---|---|---|---|
| RZ gesamt | 0,118 | 0,110 | 0,114 | 0,116 |
| | 0,111-0,130 | 0,104-0,122 | 0,101-0,120 | 0,106-0,127 |
| RZ Kopf | 0,114 | 0,105 | 0,108 | 0,116 |
| | 0,102-0,126 | 0,099-0,114 | 0,097-0,121 | 0,102-0,128 |
| RZ Gewinde | 0,123 | 0,118 | 0,122 | 0,115 |
| | 0,115-0,134 | 0,109-0,132 | 0,107-0,134 | 0,102-0,125 |
| Schichtgewicht | 0,028 | 0,031 | 0,029 | - |
| Auslaufzeit | 48" | 31" | 42" | - |
| Warmlösen | 0,067 | 0,063 | 0,063 | 0,061 |

### 5. Beispiele 18 bis 28

Weiterhin werden Versuche mit Bindemittelsystemen, die ein organisches Bindemittel in Form eines Acrylsäure-Copolymers und ein anorganisches Bindemittel in Form eines kolloidalen Kieselsols enthalten und denen verschiedene Gleit- oder Schmiermittel zugesetzt sind, durchgeführt.

Mittels Tauchschleudern werden die Beschichtungszusammensetzungen mit einer Schichtdicke von 7 µm vollflächig auf Schrauben aufgebracht und anschließend bei 150 °C für 30 Minuten getrocknet.

Die Schrauben werden anschließend einer Reibzahlbestimmung gemäß DIN EN ISO 16047:2013-01 unterzogen.

**Tabelle 11: Topcoat-Zusammensetzungen mit organischem und anorganischem Bindemittel (50 % organisch und 50 % anorganisch)**

| Zusammensetzung | 18 | 19 | 20 | 21 |
|---|---|---|---|---|
| | | | | |
| Ethylen-Acrylsäure -Copolymer [Gew.-%] | 15 | 15 | 15 | 15 |
| Kolloidales Kieselsol [Gew.-%] | 15 | 15 | 15 | 15 |
| Schmiermittel [Gew.-%] | Graphit 3 | Graphit 5 | Graphit 7 | MoS₂ 5 |
| Wasser [Gew.-%] | 77 | 75 | 73 | 75 |

**Tabelle 12: Topcoat-Zusammensetzungen mit organischem und anorganischem Bindemittel (30 % organisch und 70 % anorganisch)**

| Zusammensetzung | 22 | 23 | 24 | 25 |
|---|---|---|---|---|
| | | | | |
| Ethylen-Acrylsäure -Copolymer [Gew.-%] | 9 | 9 | 9 | 9 |
| Kolloidales Kieselsol [Gew.-%] | 21 | 21 | 21 | 21 |
| Schmiermittel [Gew.-%] | Bornitrid 5 | Graphit 5 | MoS₂ 3 | MoS₂ 5 |
| Wasser [Gew.-%] | 75 | 75 | 77 | 75 |

**Tabelle 13: Untersuchung der Reib- und Gleiteigenschaften**

| Zusammensetzung | 18 | 19 | 20 | 21 |
|---|---|---|---|---|
| RZ gesamt | 0,107 | 0,137 | 0,120 | 0,116 |
| | 0,094-0,116 | 0,133-0,145 | 0,116-0,123 | 0,096-0,133 |
| RZ Kopf | 0,117 | 0,153 | 0,137 | 0,115 |
| | 0,098-0,142 | 0,148-0,161 | 0,129-0,143 | 0,094-0,141 |
| RZ Gewinde | 0,094 | 0,116 | 0,097 | 0,118 |
| | 0,083-0,108 | 0,108-0,130 | 0,092-0,104 | 0,099-0,0136 |
| Schichtgewicht | 0,034 | 0,034 | 0,043 | 0,024 |

**Tabelle 13 Fortsetzung:**

| Zusammensetzung | 22 | 23 | 24 | 25 |
|---|---|---|---|---|
| RZ gesamt | 0,115 | 0,115 | 0,117 | 0,104 |
| | 0,101-0,127 | 0,111-0,119 | 0,084-0,146 | 0,081-0,120 |
| RZ Kopf | 0,121 | 0,119 | 0,107 | 0,100 |
| | 0,103-0,133 | 0,113-0,129 | 0,090-0,135 | 0,081-0,117 |
| RZ Gewinde | 0,107 | 0,109 | 0,131 | 0,109 |
| | 0,097-0,120 | 0,096-0,126 | 0,059-0,162 | 0,081-0,134 |
| Schichtgewicht | 0,031 | 0,031 | 0,026 | 0,025 |

## Patentansprüche

1. Wässrige Beschichtungszusammensetzung zur Herstellung einer Beschichtung, insbesondere eines Topcoats, mit einstellbarer Reibzahl,
**dadurch gekennzeichnet,**
**dass** die Zusammensetzung
(a) ein organisches Bindemittel, wobei das Bindemittel ein Copolymer aus mindestens einem ungesättigten Kohlenwasserstoff und mindestens einer ungesättigten Carbonsäure aufweist, und
(b) ein Schmiermittel
enthält.

2. Beschichtungszusammensetzung nach Anspruch 1, **dadurch gekennzeichnet, dass** der ungesättigte Kohlenwasserstoff ausgewählt ist aus der Gruppe von aliphatischen Kohlenwasserstoffen mit Vinylgruppen, aromatischen Kohlenwasserstoffen mit Vinylgruppen, aliphatischen Kohlenwasserstoffen mit Alkinylgruppen, aromatischen Kohlenwasserstoffen mit Alkinylgruppen und deren Mischungen, insbesondere aliphatischen Kohlenwasserstoffen mit Vinylgruppen, aromatischen Kohlenwasserstoffen mit Vinylgruppen und deren Mischungen, bevorzugt aliphatischen Kohlenwasserstoffen mit Vinylgruppen.

3. Beschichtungszusammensetzung nach Anspruch 1 oder 2, **dadurch gekennzeichnet, dass** der ungesättigte Kohlenwasserstoff ausgewählt ist aus aliphatischen und/oder aromatischen C₂- bis C₂₀-Verbindungen mit Alkinylgruppen, aliphatischen und/oder aromatischen C₂- bis C₂₀-Verbindungen mit Vinylgruppen und deren Mischungen, insbesondere aliphatischen und/oder aromatischen C₂- bis C₁₂- Verbindungen mit Alkinylgruppen, aliphatischen und/oder aromatischen C₂- bis C₁₂-Verbindungen mit Vinylgruppen und deren Mischungen, vorzugsweise aliphatischen und/oder aromatischen C₂- bis C₁₀-Verbindungen mit Alkinylgruppen, aliphatischen und/oder aromatischen C₂- bis C₁₀-Verbindungen mit Vinylgruppen und deren Mischungen, bevorzugt aliphatischen und/oder aromatischen C₂- bis C₈-Verbindungen mit Alkinylgruppen, aliphatischen und/oder aromatischen C₂- bis C₈-Verbindungen mit Vinylgruppen und deren Mischungen, besonders bevorzugt aliphatischen C₂- bis C₆-Verbindungen mit Vinylgruppen, ganz besonders bevorzugt aliphatischen C₂- bis C₄-Alkenen Vinylgruppen, insbesondere bevorzugt C₂- und C₃-Alkenen.

4. Beschichtungszusammensetzung nach einem der vorangehenden Ansprüche, **dadurch gekennzeichnet, dass** die ungesättigte Carbonsäure ausgewählt ist C₂- bis C₂₀-Alkensäuren, insbesondere C₂- bis C₁₂-Alkensäuren, vorzugsweise C₂- bis C₁₀-Alkensäuren, bevorzugt C₂- bis C₄-Alkensäuren, besonders bevorzugt C₂- und C₃-Alkensäuren, und deren Estern und Amiden.

5. Beschichtungszusammensetzung nach einem der vorangehenden Ansprüche, **dadurch gekennzeichnet, dass** die ungesättigte Carbonsäure ausgewählt ist aus der Gruppe von Acrylsäure, Estern der Acrylsäure mit C₁- bis C₁₀-Alkoholen, Methacrylsäure, Estern der Methacrylsäure mit C₁- bis C₁₀-Alkoholen, Fumarsäure, Maleinsäure, insbesondere Acrylsäure, Estern der Acrylsäure mit C₁- bis C₁₀-Alkoholen, Methacrylsäure und Estern der Methacrylsäure mit C₁- bis C₁₀-Alkoholen.

6. Beschichtungszusammensetzung nach einem der vorangehenden Ansprüche, **dadurch gekennzeichnet, dass** die Beschichtungszusammensetzung das organische Bindemittel in Mengen von 2 bis 70 Gew.-%, insbesondere 5 bis 60 Gew.-%, vorzugsweise 10 bis 50 Gew.-%, bevorzugt 10 bis 40 Gew.-%, bezogen auf die Beschichtungszusammensetzung, enthält.

7. Beschichtungszusammensetzung nach einem der vorangehenden Ansprüche, **dadurch gekennzeichnet, dass** das Schmiermittel ausgewählt ist aus der Gruppe von organischen Schmiermitteln, anorganischen Schmiermitteln und deren Mischungen, vorzugsweise organischen Schmiermitteln.

8. Beschichtungszusammensetzung nach einem der vorangehenden Ansprüche, **dadurch gekennzeichnet, dass** das Schmiermittel ausgewählt ist aus der Gruppe von Wachsen, Graphen, Graphit, Bornitrid, Molybdändisulfid, Kunststoffpartikeln, insbesondere aus Polyetherketon (PEK), Polyetheretherketon (PEEK), Polyphenylensulfid (PPS), Polyethersulfon (PES), Polyetherimid (PEI), Polyamidimid (PAI) und deren Mischungen, mikronisiertem Schwefel und deren Mischungen, vorzugsweise Wachsen.

9. Beschichtungszusammensetzung nach einem der vorangehenden Ansprüche, **dadurch gekennzeichnet, dass** die Beschichtungszusammensetzung das Schmiermittel in Mengen von 0,1 bis 10 Gew.-%, insbesondere 0,3 bis 8 Gew.-%, vorzugsweise 0,5 bis 5 Gew.-%, bevorzugt 0,8 bis 4 Gew.-%, bezogen auf die Beschichtungszusammensetzung, enthält.

10. Beschichtungszusammensetzung nach einem der vorangehenden Ansprüche, **dadurch gekennzeichnet, dass** die Beschichtungszusammensetzung frei ist von fluorhaltigen Verbindungen, insbesondere frei ist von organischen fluorhaltigen Verbindungen.

11. Beschichtungszusammensetzung nach einem der vorangehenden Ansprüche, **dadurch gekennzeichnet, dass** die Beschichtungszusammensetzung plättchenförmige Partikel enthält.

12. Beschichtungszusammensetzung nach einem der vorangehenden Ansprüche, **dadurch gekennzeichnet, dass** die Beschichtungszusammensetzung ein anorganisches Bindemittel enthält.

13. Beschichtungszusammensetzung nach Anspruch 12, **dadurch gekennzeichnet, dass** das anorganische Bindemittel ausgewählt ist aus Silanen, Silanhydrolysaten, Silikaten, Polysilikonaten und deren Mischungen.

14. Beschichtungszusammensetzung nach Anspruch 12 oder 13, **dadurch gekennzeichnet, dass** die Beschichtungszusammensetzung
(a1) ein organisches Bindemittel, wobei das Bindemittel ein Copolymer aus mindestens einem Olefin und mindestens einer ungesättigten Carbonsäure aufweist,
(a2) ein anorganisches Bindemittel und
(b) ein Schmiermittel
enthält.

15. Verwendung einer Beschichtungszusammensetzung nach einem der Ansprüche 1 bis 14 als Topcoat zur Erzeugung einer Beschichtung mit einstellbarer Reibzahl auf einem metallischen Substrat, insbesondere einem mit einer kathodischen Korrosionsschutzbeschichtung versehenen metallischen Substrat.

16. Verfahren zur Herstellung einer Beschichtung mit gezielt einstellbarer Reibzahl, **dadurch gekennzeichnet, dass**
(a) in einem ersten Verfahrensschritt ein Substrat, welches zumindest bereichsweise mit einer kathodischen Korrosionsschutzbeschichtung versehen ist, vorgelegt wird,
(b) in einem auf den ersten Verfahrensschritt (a) folgenden zweiten Verfahrensschritt eine Beschichtungszusammensetzung gemäß einem der Ansprüche 1 bis 20 zumindest bereichsweise auf das Substrat aufgebracht wird und
(c) in einem auf den zweiten Verfahrensschritt (b) folgenden dritten Verfahrensschritt die im zweiten Verfahrensschritt (b) aufgebrachte Beschichtungszusammensetzung getrocknet wird.

17. Verfahren nach Anspruch 16, **dadurch gekennzeichnet, dass** die Reibzahl des beschichteten Substrats im Bereich von 0,09 bis 0,16, bestimmt nach DIN EN ISO 16047:2013-01, eingestellt wird.

18. Metallisches Substrat, aufweisend eine Beschichtung, insbesondere erhältlich mit einer Beschichtungszusammensetzung nach einem der Ansprüche 1 bis 14 oder nach einem Verfahren gemäß einem der Ansprüche 16 oder 17.

19. Metallisches Substrat nach Anspruch 18, **dadurch gekennzeichnet, dass** die Beschichtung das Schmiermittel in Mengen von 1 bis 25 Gew.-%, insbesondere 1 bis 20 Gew.-%, vorzugsweise 1,5 bis 17 Gew.-%, bevorzugt 2 bis 15 Gew.-%, besonders bevorzugt 2,5 bis 12 Gew.-%, bezogen auf die Beschichtung, enthält.

20. Metallisches Substrat nach Anspruch 18 oder 19, **dadurch gekennzeichnet, dass** das organische Bindemittel in Mengen von 60 bis 99 Gew.-%, insbesondere 65 bis 99 Gew.-%, vorzugsweise 70 bis 98 Gew.-%, bevorzugt 75 bis 97 Gew.-%, besonders bevorzugt 80 bis 96 Gew.-%, bezogen auf die Beschichtung, enthält.
